(19) Europäisches Patentamt
European Patent Office
Office européen des brevets

(11) **EP 2 880 413 B1**

(12) **EUROPEAN PATENT SPECIFICATION**

(45) Date of publication and mention
of the grant of the patent:
**30.10.2019 Bulletin 2019/44**

(51) Int Cl.:
***G01N 9/26*** *(2006.01)*

(21) Application number: **13828289.2**

(86) International application number:
**PCT/US2013/053528**

(22) Date of filing: **03.08.2013**

(87) International publication number:
**WO 2014/025652 (13.02.2014 Gazette 2014/07)**

(54) **NETWORK MANAGEABLE ADVANCED GAS SENSOR APPARATUS AND METHOD**

ÜBER EIN NETZWERK VERWALTBARE ERWEITERTE GASSENSORVORRICHTUNG UND VERFAHREN DAFÜR

APPAREIL ET PROCÉDÉ DE CAPTEUR DE GAZ PERFECTIONNÉ ADMINISTRABLE PAR RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2012 US 201213568108**
**11.09.2012 US 201261699835 P**

(43) Date of publication of application:
**10.06.2015 Bulletin 2015/24**

(73) Proprietor: **Solon Manufacturing Company Chardon, OH 44024 (US)**

(72) Inventor: **SCHEUCHER, Karl F.**
**Waite Hill, OH 44094 (US)**

(74) Representative: **Puschmann Borchert Bardehle Patentanwälte Partnerschaft mbB Bajuwarenring 21 82041 Oberhaching (DE)**

(56) References cited:
**WO-A1-2010/043268    US-A- 3 046 369**
**US-A- 3 749 865    US-A- 3 749 865**
**US-A- 4 364 271    US-A- 4 364 271**
**US-A- 5 245 869    US-A1- 2010 063 749**
**US-B2- 7 149 374    US-B2- 7 249 517**

**Description**

The field of invention is the field of intelligent gas sensors with the capability to measure the pressure and temperature of one or more target gas substances contained in a known volume and to compute the mass of gas so contained as it varies in time due to additions or losses. The invention is also in the field of intelligent networked sensor nodes that exchange sensor information and sensor configuration and control information over communication networks. The field of invention also includes sensors that measure time-varying environmental conditions such as ambient temperature, atmospheric pressure, ambient light conditions, ambient sound levels, as well as various electrical conditions of equipment adjacent systems including AC and DC voltages and currents. The invention also comprises the field of dielectric gas sensors and gas leakage sensors.

There is a clear need for a low cost, network manageable, advanced gas sensor for sulfur hexafluoride gas ($SF_6$) used in high voltage electric switchgear. $SF_6$ plays a crucial arc-suppression role in this equipment. An expensive commodity and a potent greenhouse gas (GWP 23,900 times that of $CO_2$), $SF_6$ lost through leakage is a costly problem justifying an effective monitoring system. The instant invention appreciates the application requirements and the sensor and communications network technologies required to meet them. The invention further supports security aspects that are paramount and tolerates the outdoor substation application environment which is challenging.

Worldwide, of 7 million kg of $SF_6$ produced annually, most (~75% or 5.5 metric tones per annum) is used for electric power equipment. Consequences for the environment and cost implications for electrical energy producers and users are clearly conveyed. Lower-impact, lower-cost alternatives to $SF_6$, though sought, are not found, Techniques for estimating emissions have been based predominately upon indirect, mass-balance accounting methods that are costly and error-prone. Trials using expensive equipment (e.g. IR camera) combined with substantial labor have nonetheless shown that environmental impacts and gas expense arising from leakage are significant and can be reduced.

Presently, $SF_6$ contributes 3% $CO_2$-equivalent emissions. As global electric usage ($3 \times 10^6$ Wh/capita) ascends to U.S. levels ($1.3 \times 10^7$ Wh/capita), global generation increases 5-fold. While $CO^2$ emission per kWh generated must surely decrease, SF6 emissions will scale with distribution. Switchgear equipment manufacturers and utilities need a low cost, network manageable, advanced gas sensor to achieve reductions in $SF_6$ emissions per kWh.

All electric producers and users benefit. The instant invention targets economical, distributed sensor technology that can be applied worldwide to achieve a 100-fold reduction in emissions rate - a tremendous opportunity for the environment and economies worldwide.

US 3 749 865 A discloses a temperature-compensated gas density relay includes a bellows unit subjected to the gas, the pressure from which is transmitted by the bellows unit through a support mounting a bi-metallic disc and a shaft carried by the central portion of the bi-metallic, and longitudinal displacement of the shaft in response to the change in gas pressure serves to actuate the contacts of an electrical switch component of the relay. Should there be a change in the gas temperature, compensation therefor is accomplished by a temperature-induced displacement of the central portion of the bi-metallic disc, and hence also the shaft, in a direction opposite to that caused by the change in the gas pressure resulting from that same change in temperature

US 4 364 271 A refers to a terrestrial refractometer comprising a gastight enclosure of substantially invariant transverse section and having a linearly movable endwall which varies in position in accordance with ambient temperature and pressure, the enclosure containing a fixed mass of a gas which at least approximates to an ideal gas; sensing means responsive to the linear position of the endwall; and compensating means arranged to apply a compensating factor which is proportional to the linear movement by the endwall from its position under conditions of standard temperature and pressure.

Although this patent application emphasizes use of the invention for sensing $SF_6$ in electric breaker applications, it is an important goal of the invention to create a technology platform for highly integrated gas sensors and to be readily adaptable to many different gases and gas mixtures used in a broad range of processes.

For this purpose, the gas sensor apparatus of the invention comprises the features of claim 1, and the method of the invention comprises the features of claim 8. Preferred embodiments of the invention are characterized in the sub-claims.

This invention combines the mechanical, electronic, algorithmic, and network facets needed to create a technology platform for highly integrated gas sensors. These sensors are of great value to electric utility companies and therefore to the manufacturers of equipment used by the utilities. A sensor will be usefully integrated into each gas insulated tank of each breaker and switch unit manufactured (tens of thousands of sensors). These sensors integrated into high voltage switchgear products, deployed by electric utility end users in replacement and expansion cycles, function to detect and mitigate atmospheric pollution caused by leaking $SF_6$. As its associated gas insulated tank is charged with 10 to 350 lbs. of $SF_6$, each gas sensor monitors its local cache of gas, accurately sensing and computing fractional percentage losses (emissions) and gains (maintenance replacement) in $SF_6$ mass, storing data in onboard data logs, and communicating data when triggered by detection events or in response to remote requests over a hierarchical communications network, a process that continues without labor until a fractional leak is automatically detected and reported creating the opportunity for early leak mitigation. Sensors also detect and log repair events including the addition of gas made to replace losses, thus closing the overall monitoring and mitigation loop.

Although a variety of devices and systems for monitoring and measuring aspects of $SF_6$ gas in laboratory and field settings are currently described in the research and trade literature, none represent a fully integrated, economical, network interface-able component for automatically monitoring SF6 gas trends in real-time on a tank-by-tank globally distributed basis. Approaches based upon IR imaging such as EPRI and FLIR devices are expensive in both equipment and labor and therefore find use monitoring for gas leaks only on a spot versus continuous basis.

High voltage breakers and gas insulated switchgear (GIS) require their $SF_6$ content to be carefully monitored and controlled, Arc-suppression safety becomes an issue when gas supply is insufficient, Overpressure is problematic with excess gas levels. Determining that gas levels are in the desired range is generally achieved by gas density estimates which in turn are generally derived from gas pressure measurements appropriately compensated for temperature variations. The well known ideal gas law provides a simple model which conveys the concept:

$$(1) \quad pV = nRT \therefore n/V = p/R$$

Where P is gas pressure in the system, V is the volume of gas which is fixed by the equipment's rigid tank, R is a constant, T is temperature, and n is the mass quantity of gas. With V and R constant, measuring P and T determines n / V, the gas density.

Two types of products have been developed which address the gas content control task. One type, which may generally be referred to as a gas density "monitor", detects gas density by comparing relatively few thresholds such as: a) high limit, b) nominal limit, c) low limit, and d) low lockout limit. This allows the user to resolve gas density into one of five broad bins: 1) above a, 2) between a and b, 3) between b and c, 4) between c and d, and 5) below d. As illustrated in table 1, while this information is sufficient to enforce the above mentioned safety functions, it falls short of the resolution needed for meaningful emissions mitigation. Manufacturers producing gas density monitor-type products include Solon Manufacturing, Wika, and Comde. In general, these products, unlike IR cameras, are relatively low cost (under $1k USD), of a simple and robust design, well accepted in the marketplace, and therefore in wide use.

A second type of product for gas control applications may generally be referred to as a gas density "transmitter". This variant measures gas parameters including pressure and temperature to higher resolution, incorporates electronics to derive a temperature compensated density from those measurements, and transmits a density proportional electrical output such as the standard 4-20 mA current loop. These devices, newer to the market, tend to be substantially more complex and costly. The higher resolution density measurement is a step closer to being useful for meaningful emissions detection and mitigation, but a substantial amount of additional functionality must be added externally by the user to interpret the density signal, track and log trends, and communicate decisive information over the user's management network.

Accounting for the impact of temperature variation is of course an important aspect of accurate gas density and therefore accurate gas mass predictions. The operating temperature range for breakers of table 1 is uniformly -40°C to 40°C. At a nominal pressure of 517 101 $m^{-1}$.$kg$.$s^{-2}$ (75 psig) at 20°C, this temperature variation corresponds to a-103 421 $m^{-1}$.$kg$.$s^{-2}$ to 34 473.8 $m^{-1}$.$kg$.$s^{-2}$ (-15 psi to +5 psi) variation in pressure. Under equilibrium conditions, the temperature compensation is straight forward. However, temperature is rarely expected to be "at equilibrium" in the case of breakers and Gas Insulated Switch (GIS) equipment deployed in outdoor environments across the land. A host of factors including sun, wind, precipitation, and weather in general will drive short-term and diurnal temperature variations which in turn will create temperature gradients across tanks of $SF_6$ gas. Applying the necessary algorithms to effectively compensate temperature dynamics to achieve the desired detection accuracies yet avoid false alarms is a major accomplishment of this invention.

In summary, achieving $SF_6$ detection and mitigation efficiency several orders of magnitude better that current practice, to maintain or improve on current levels of leakage in the face of anticipatged global electrical consumption increases, according to the foregoing analyses, requires a 100-fold improvement which in turn implies gas sensor detection sensitivities of 0.5 kg to 1.0 kg reliably achieved over dynamic thermal conditions. The instant invention, achieveing the aforementioned detection sensitivity and combining network communications to trigger early service mitigation, brings the 100-fold improvement goal within reach.

Practically speaking, the invention represents an advanced gas sensor that both leverages the advantages of existing technology and applies innovations to overcome its shortcomings with respect to the $SF_6$ emissions mitigation application. It can be globally deployed on breakers and GIS equipment, will accurately track gas additions and losses in real-time, and will be readily integrated into a broad network management infrastructure enabling cost-effective emissions mitigation.

The economic and ecological importance of improved $SF_6$ gas management has been emphasized. In real terms, each of 6.8 billion humans on earth is a stakeholder. The future of his environment, the quality and cost of his electricity, and the cost of all other goods and services he covets (that rely upon electricity) are at stake.

The most immediate beneficiaries of this invention and its technology will be companies that manufacture and sell the advanced sensors it enables. This invention and technology is conceived to be low ingredient cost and designed for manufacturability from inception. Inherently software configurable, it supports flexible optioning and extensible functionality. As to their customers, advanced gas sensor component manufacturers will enjoy the same growing market now shared by conventional gas density switch manufacturers, namely breaker and GIS switchgear OEMs, electric utilities, and other electric substation designers and operators. For example, a manufacturer of gas density switches in North American markets, estimates annual sales over 10,000 units with significant market growth. For the customers' sakes, this invention and technology is conceived to support the surgical detection, tracking, and mitigation of $SF_6$ loss through equipment leakage with products that represent low component and operating cost burdens to the user. The economic benefits are manifold:

- Gas expense savings (demand for $SF_6$ and therefore gas costs, already ~$10/1b, is increasing)
- Direct process data captured automatically inexpensively demonstrates regulatory compliance, compared to costly, complex, and error prone mass balance procedural alternatives
- Avoidance of regulatory fines for emissions; and,
- Capture of offset credits

What is the market size for customers that desire these benefits? Based upon a weighted, average nameplate $SF_6$ capacity of 73 kg, and considering global annual $SF_6$ utilization for electric equipment of 5,500 metric tons, and assuming 3 pole tanks per breaker, one can estimate a global population of equipment increasing at approximately 200,000 tanks per year. Assuming this corresponds to a growth rate of 5%, the global established market can be inferred to be approximately 4 million tanks. This is the immediate market for my sensor invention in the upgrade space. Please see, J. Blackman, M. Averyt, and Z. Taylor, "SF6 Leak Rates from High Voltage Circuit Breakers - U.S. EPA Investigates Potential Greenhouse Gas Emissions Source", presented at the International Conference on SF6 and the Environment: Electric Power Systems - Partnership Update, November 28, 2006, Available at http://www.epa.gov/electricpower-sf6/documents/leakrates_circuitbreakers .pdf.

This invention is conceived to be market friendly, utilizing a mechanical bellows technology and form factor well entrenched in the present market. Flexible network interface functionality renders this sensor easy to integrate in the user's network management system.

**BRIEF DESCRIPTION OF THE DRAWINGS**

Fig. 1 is a perspective view of the gas sensor apparatus.
Fig. 2 is a perspective view of the gas sensor apparatus with covering and housing removed.
Fig. 3 is a perspective view of the gas sensor apparatus similar to Fig. 2 with the pushbutton removed.
Fig. 4 is a perspective view of the gas sensor apparatus similar to Fig. 3 with the temperature sensors and their mounting plate removed.
Fig. 5 is a perspective view of the gas sensor apparatus similar to Fig. 4 with the processor printed circuit board removed.
Fig. 6 is a left side view of the gas sensor apparatus of Fig. 5.
Fig. 6A is an enlarged portion of Fig. 6.
Fig. 6B is a right side view of the gas sensor apparatus of Fig. 5.
Fig. 7 is a top view of the of the gas sensor apparatus as illustrated in Fig. 6 with the printed circuit board removed illustrating the lever and switch.
Fig. 8 is a bottom view of the printed circuit board.
Fig. 8A is a bottom perspective view of the printed circuit board.
Fig. 9 is a bottom perspective view of the gas sensor apparatus.
Fig. 10 is a front view of the sensor internal components.
Fig. 10A is front view of the gas sensor apparatus internal components with the riser cutaway illustrating the bellows.
Fig. 10B is an enlargement of a portion of Fig. 10A.
Fig. 11 is a top view of gas sensor apparatus internal components.
Fig. 11A is a cross-section of Fig. 11.
Fig. 12 is a top view of the gas sensor apparatus internal components.
Fig. 12A is a cross-sectional view of the gas sensor apparatus of Fig. 12.

Fig. 13 is a hardware block diagram.
Fig. 14 is a processing block diagram.
Fig. 15 is a graph lever position as a function of gas pressure at 25°C.
Fig. 16 is a normalized sensor response as a function of lever position.
Fig. 17 is a graph of pressure compensation required as a function of temperature.
Fig. 18 is a graph of temperature of normalized temperature sensor response.
Fig. 19 is a block diagram of the gas sensor system in a 3-phase breaker application.
Fig. 20 is a side perspective view of a gas sensor hub module.
Fig. 21 is an end perspective view of a gas sensor hub module.
Fig. 22 is an opposite side perspective view of a gas sensor hub module.
Fig. 23 is a top view of a gas sensor hub module.
Fig. 24 is a graphical user interface gas sensor reporting screen.
Fig. 25 is a graphical user interface gas sensor configuration screen.
Fig. 26 is a table of gas sensor numerical data.
Fig. 27 is a graphical representation of gas sensor numerical data.
Fig. 28 is a multi-conductor cable for interconnecting a gas sensor with a gas sensor hub module.

## DESCRIPTION OF THE INVENTION

As stated above, the instant invention supports a 100-fold reduction in gas emissions. What does this imply for gas density measurement requirements? To address this question, begin by considering that, at a temperature of 20°C, the operating pressure for the breakers of table 1 ranges from 441 264 $m^{-1}.kg.s^{-2}$ to 565 370 $m^{-1}.kg.s^{-2}$ (64 psig to 82 psig) a span of 124 106 $m^{-1}.kg.s^{-2}$ (18 psi).

Table 1 also gives the nominal gas mass change attributable to pressure change for each breaker under the aforementioned isothermal conditions. The function is simply proportional to the differential tank volume of the various breakers given the isothermal assumption. As expected, the largest tank represents a worst case requirement for mass sensing resolution since smaller pressure changes accompany larger gas losses (large mass changes). In general, larger tanks will require higher resolution measurements to detect unit changes in gas mass.

**TABLE 1**

| Breaker Model Designation | HS | HP-1 | HP-2 | HP-3 | HPI-1 | HPI-2 |
|---|---|---|---|---|---|---|
| Rated Maximum Voltage (kV) | 72.5 | 145 | 169 | 242 | 345 | 550 |
| Interrupting Current Rating (kA) | 31.5 | 40 | 40 | 40 | 362 | 40 |
| Tank Volume (cubic meters) | 0.151 | 0.561 | 0.732 | 1.171 | 3.367 | 3.542 |
| SF6 weight at fill pressure (kg) | 5.2 | 19.1 | 24.9 | 39.9 | 114.8 | 120.7 |
| SF6 weight at nominal (kg) | 4.7 | 17.4 | 22.7 | 36.3 | 104.3 | 109.8 |
| SF6 weight at alarm (kg) | 4.3 | 16.0 | 20.9 | 33.4 | 96.1 | 101.1 |
| SF6 weight at lockout (kg) | 4.0 | 14.8 | 19.3 | 31.0 | 89.0 | 93.6 |
| SF6 Emission between fill and alarm (kg) | **0.8** | **3.1** | **4.1** | **6.5** | **18.7** | **19.7** |
| SF6 mass per unit pressure (kg/psi) | 0.063 | 0.232 | 0.302 | 0.484 | 1.391 | 1.464 |
| Distribution frequency[12] | 50% | 14% | 13% | 15% | 6% | 2% |

Table 1 - Representative gas insulated breakers with OEM recommended SF6 fill conditions. If filled to just below fill capacity, breaker type HPI-2 would emit 19.7 kg of SF6 before the alarm threshold would trigger. Typically the so-called "nameplate capacity" will be three times larger than the above tank capacity since the breaker comprises three phases each with its individual tank The approximate frequency with which various sizes occur in practice is attributable from Blackman.

Now the question arises, what is the magnitude of gas loss one needs to begin detecting? SF6 emission rates studied by various methods to date appear to place gas emissions in the range of 5% to 10% of total nameplate capacity annually. Accounting for frequency of distribution of breakers by voltage rating (and therefore by tank size), the weighted average of the nameplate capacities is approximately 73 kg (remember - 3 tanks per breaker typically). In a study of 2,329 breakers by Blackman, 170 (7.3%) were found to be leaking. The amount of gas emitted to atmosphere annually may thereby be estimated at 3.7 kg to 7.3 kg per breaker (5% to 10% of 73kg). The actual leaks arise from the aforementioned 7.3% of the breaker population. Therefore, the average leakage amount per leaking breaker is on the order of 50 kg to 100 kg annually.

The sensor-gas interface mechanism as one component of the advanced gas sensor has many important aspects. The use a mechanical bellows approach is utilized for several reasons. These reasons include the bellow's simplicity, reliability, and broad use in $SF_6$ gas density switch applications. The use of a mechanical bellows leads to a requirement for detecting and processing mechanical displacement information. Processing the displacement information supports accurate gas pressure inferences.

The advanced gas sensor combines a bellows sensing element with an MCU Electronics module comprising electronics and software for acquiring raw displacement and temperature information and processing these into accurate measurements.

Reliable pressure and temperature readings must ultimately be rendered from raw sensor data. The present invention utilizes an efficient signal processing chain for this purpose. Noise, stability, and other potential problems are thereby identified and overcome.

Processed pressure and temperature readings must be interpreted to predict gas density which in turn predicts gas mass changes in light of known, rigid tank volumes. The process, in isothermal conditions, is relatively straight forward. Under conditions of changing temperature, the process becomes more challenging. Ideal gas law and virial equations with alternative techniques for calculating temperature dependent coefficients form the foundations of the algorithms utilized for this purpose.

As stated earlier, the present invention uses a mechanical bellows approach to gas interface and pressure sensing. The advantages of this choice are described above. Mechanical bellows components are readily available from a variety of sources including Solon Manufacturing of Chardon, OH. Mechanical bellows are widely used in mechanical, gas density monitoring products that enjoy a dominant share of the North American alarm-monitoring market.

The bellows expands under increasing pressure. In the configuration of the embodiments set forth herein, the bellows actuates a rigid coupling to a platen. The platen's starting position and translational gain are simultaneously adjusted with a counter-biasing coil spring. Nominal gain in the range of 0.001" platen deflection per 6 894.76 $m^{-1}.kg.s^{-2}$ (1 psi) change is typically achieved.

In the mechanical density monitor application, the platen carries bi-metal elements that in turn actuate snap-action micro-switches under conditions of sufficient displacement. The bi-metal elements provide a mechanical temperature compensation mechanism.

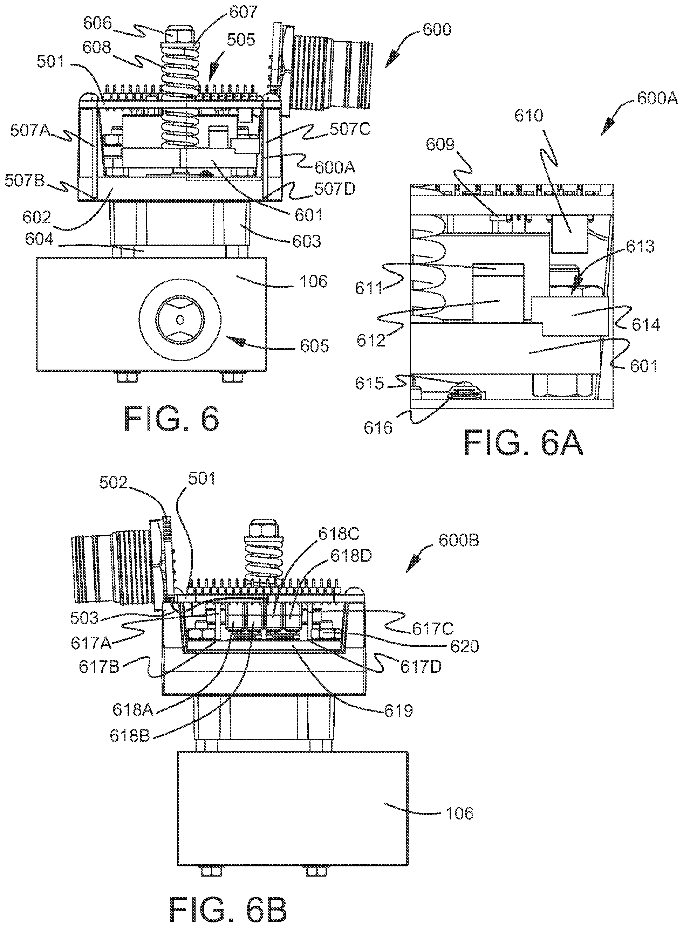

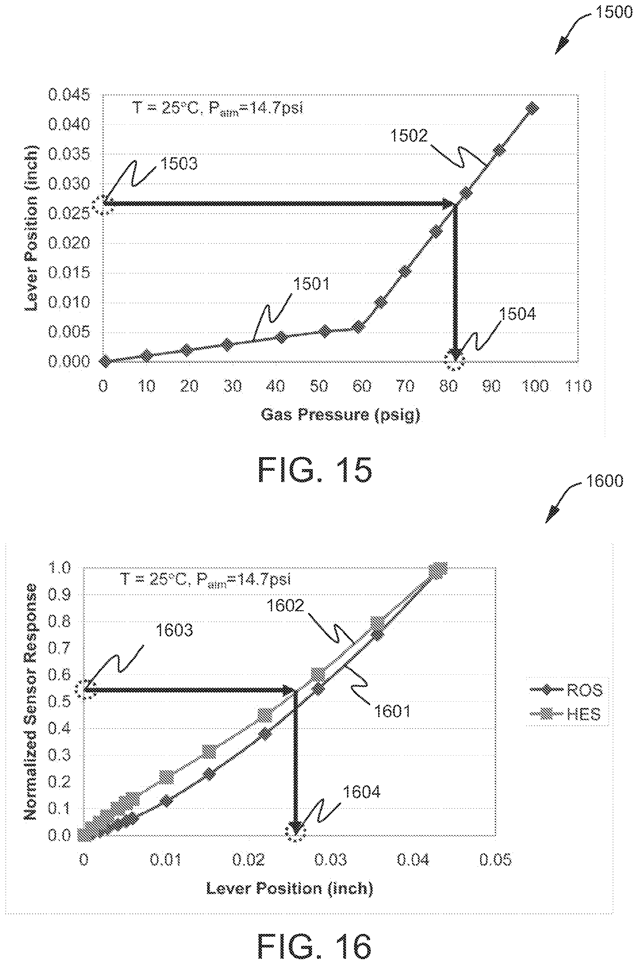

Contrastingly, in the instant invention, the platen is adapted to carry displacement sensor components which take the form of reflective surfaces, magnets, and other components supporting displacement detection alternatives. Fig. 16 shows the normalized sensor response of an embodiment which utilizes an infrared reflective object sensor (ROS) and another embodiment that uses a Hall Effect sensor (HES). Figs. 6, 6A, 9, 10, 10A, 10B, and 12A show the mechanical aspect of embodiments using the reflective object sensor and Hall effect sensor components respectively.

As stated above, the invention targets supporting a 100-fold reduction in gas emissions. In the discussion above, it was deduced that a 100-fold improvement in emissions mitigation implies gas sensor sensitivities of 0.5 kg to 1.0 kg. According to table 1 above, this suggests a differential pressure resolution on the order of 110 316 $m^{-1}.kg.s^{-2}$ to 2 413.17 $m^{-1}.kg.s^{-2}$ (16 psi to 0.35 psi). Recall that the operating span of interest is approximately 124 106 $m^{-1}.kg.s^{-2}$ (18 psi). Thus the required pressure measurement resolution (before correction) is in the range of 1 part in 1.2 to 1 part in 52.7. In digital measurement terms, this corresponds to a 1 bit to 6 bit dynamic range, which is achieved using a microcontroller and 12 bit analog to digital converters.

Core bellows devices, prior to any modification, have been bench tested for displacement response over the pressure range of interest at 20°C. Conventional gauge room equipment was used to measure displacement. Regulated compressed air provided pressure actuation. Pressure gradients in both directions have been utilized to quantify hysteresis, and several runs are made to assess short-term repeatability. Analysis of data captured in these tests was analyzed and definitively demonstrates the bellows fitness for the application in this invention as shown hereinbelow.

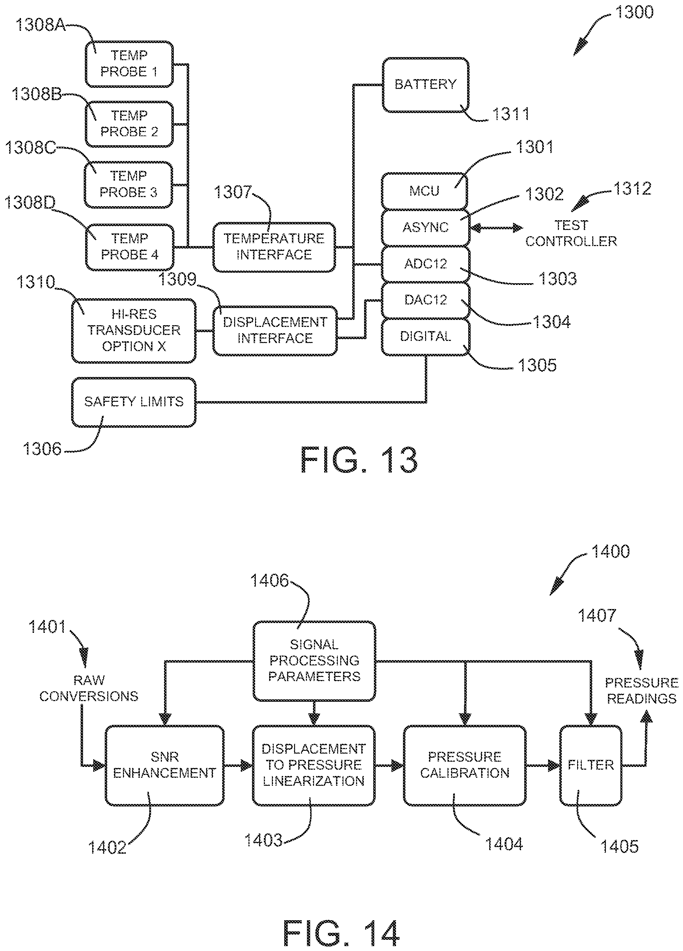

A microcontroller 1301 is used to perform displacement sensing and temperature sensing, and to communicate raw data to the other controller functions (via asynchronous serial communications initially). Figure 13 is a simplified block diagram of the MCU 1301 and its interactions with the other elements of the invention. The Hi-RES transducer 1310 can optionally be the aforementioned infrared reflective object sensor (ROS), Hall Effect sensor (HES), or other displacement transducer. The temperature probes can be thermistors 507B, 507D, 617B, 617D, thermocouples, RTD, or other suitable temperature transducers. Fig. 13 illustrates, diagrammatically, temperature probes 1308A, 1308B, 1308C, 1308D located within the sensor housing. Reference numerals 1308A-D indicate, generically, many different types of temperature probes which may be used. Fig. 13 also illustrates the battery 1311, a temperature interface 1307, a displacement interface 1309, as well as a test controller (network manageable controller) 1312, a communication subsystem 1302, an analog to digital controller 1303, and a digital to analog controller 1304, a digital I/O interface subsystem 1305, and a safety limit detection subsystem 1306.

MCU subsystem modularity allows easy substitution of alternative circuits for the powered by battery DISPLACEMENT INTERFACE 1309 and HI-RES TRANSDUCER 1310. The MCU 1301 monitors battery state of charge and computes circuit power consumption as well, an important distinguishing characteristic of circuit and algorithmic alternatives. The FLASH memory based MCU 1301 may be conveniently reprogrammed to adapt to varying sensing requirements. Operating parameters may be programmed and acquired data retrieved over the bidirectional, asynchronous communications interface.

Initial choices for HI-RES TRANSDUCER 1310 used to measure platen 601 displacement include Hall Effect and photo diode / transistor technologies. The optical alternatives comprise both transmission and reflective technologies. Piezo strain gauge and ultrasonic systems are possible as well.

Processing and calibration requirements for rendering accurate pressure readings from displacement data are included. Temperature channels are also logged during operation. All data generated by the displacement and temperature measurement blocks is forwarded to the Temperature and Pressure Processing blocks. The invention covers the operating and temperature ranges of interest. Temperature gradient and leak rate tests are also satisfied. The invention includes the signal processing necessary for rendering reliable pressure and temperature readings from raw displacement and temperature sensor data.

Figure 14 is a processing block diagram 1400 which illustrates the general topology for processing displacement data. A similar signal chain is utilized for temperature data. The order of the functions utilized is based upon the characteristics of the raw data and the desired resolution and accuracy of the processed readings. Reference numeral 1401 signifies raw conversions from displacement and temperature subsystems which are input into a system which enhances the signal to noise ratio. Reference numeral 1403 signifies a system which linearizes the displacement to pressure calculation. Reference numeral pressure calibration signifies a pressure calibration system and reference numeral 1405 signifies a digital filtering subsystem. Reference numeral 1406 signifies signal processing parameters which are included in the signal to noise ration subsystem and the linearization of displacement into pressure. Reference numeral 1407 signifies pressure readings output to gas mass calculations and user interfaces.

Fig. 15 is a graph lever position 1500 as a function of gas pressure at 25°C. Reference numeral 1501 indicates the lever response from 0 $m^{-1}.kg.s^{-2}$ to 413 685 $m^{-1}.kg.s^{-2}$ (0 psig to 60 psig). It will be noticed that line 1501 represents the displacement of the lever with respect over pressure range of 0 $m^{-1}.kg.s^{-2}$ to 413 685 $m^{-1}.kg.s^{-2}$ (0 psig to 60 psig) and with the lever acting against the ball nose spring plunger. Reference numeral 1502 is a line on the graph of the lever position 413 685 $m^{-1}.kg.s^{-2}$ to 689 476 $m^{-1}.kg.s^{-2}$ (60 psig to 100 psig) for the coil spring 608 and bimetal hinge 708. Reference numeral 1503 is a particular lever position of 0.026" corresponding to a pressure 1504 of 558 475 $m^{-1}.kg.s^{-2}$ (81 psig).

Fig. 16 is a normalized sensor response 1600 as a function of lever position at 25°C. Fig. 16 is a normalized sensor response 1600 as a function of lever position. Reference numeral 1601 is the response of reflective object sensor and reference numeral 1602 is the response of Hall effect sensor (HES). Reference numeral 1603 is a particular HES response of 0.55 corresponding to a particular lever position 1604 of 0.026".

N.B. Calibration is achieved entirely using digital techniques to determine coefficients stored onboard in nonvolatile memory. Use of precision or adjustable components is avoided in favor of standard tolerance, inexpensive, high stability components.

An equation of state model is required to compute the target gas density from calibrated temperature and pressure data. A first order Gas Density Model is used and provides satisfactory results in many cases.

The well known virial form set forth below as equation 2 utilizing coefficient functions for $SF_6$ selected from various perspectives is an alternative embodiment:

$$(2) \qquad \frac{pV}{nRT} = 1 + B(T)\frac{n}{V} + C(T)\frac{n^2}{V^2} + \cdots$$

Where p, V, n, R, and T have their usual meanings in the ideal gas law, and B(T) and C(T) are the second and third virial coefficients respectively, each non-linear functions of temperature T.

This step further draws upon recent work by Scalabrin describing a computationally efficient neural network technique for computing coefficients in a certain form of state equation.

It is an important aspect of the instant invention to use a micro-power microcontroller platform to sense gas density to sufficient accuracy to discern 0.5 kg emission events under a range of conditions of interest for the largest tank volumes expected.

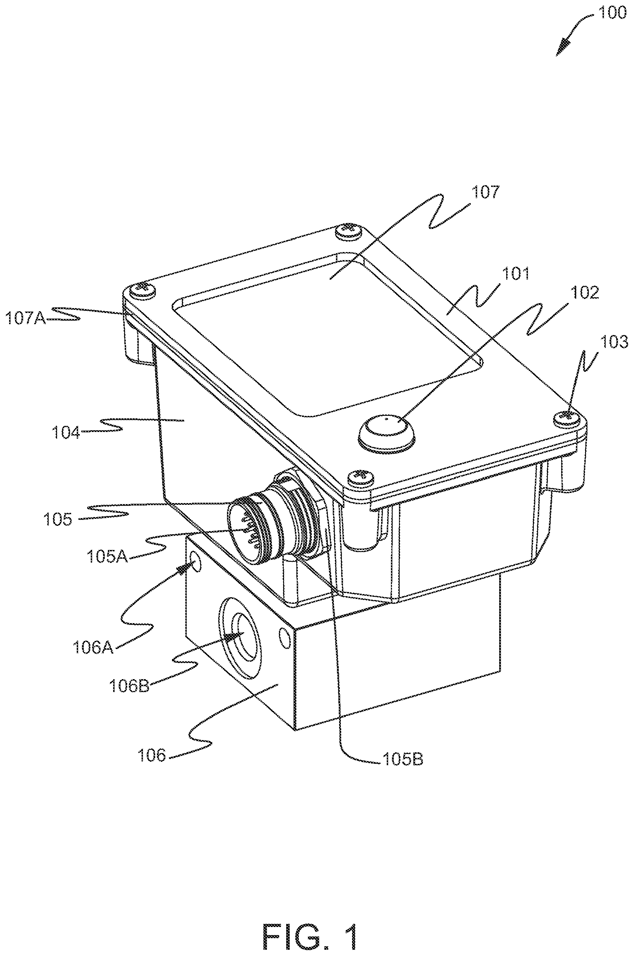

Fig. 1 is a perspective view 100 of the gas sensor apparatus. Cover 101 and liquid tight pushbutton 102 are shown in Fig. 1. Cover 101 is affixed to housing 104 by cover retaining screws 103. Sensor connector 105 provides communications between the gas sensor apparatus and the exterior of the switchgear control cabinet. Power to the apparatus is also supplied through the connector pins 105A. Connector nut 105B affixes the connector to the housing 104. Manifold block 106 includes a first gas port 106B for admission of gas to the gas sensor apparatus. Manifold block bolt hole 106A includes bolts which secure the manifold in place. A display deadfront 109 (display cover) and gasket 107A are illustrated.

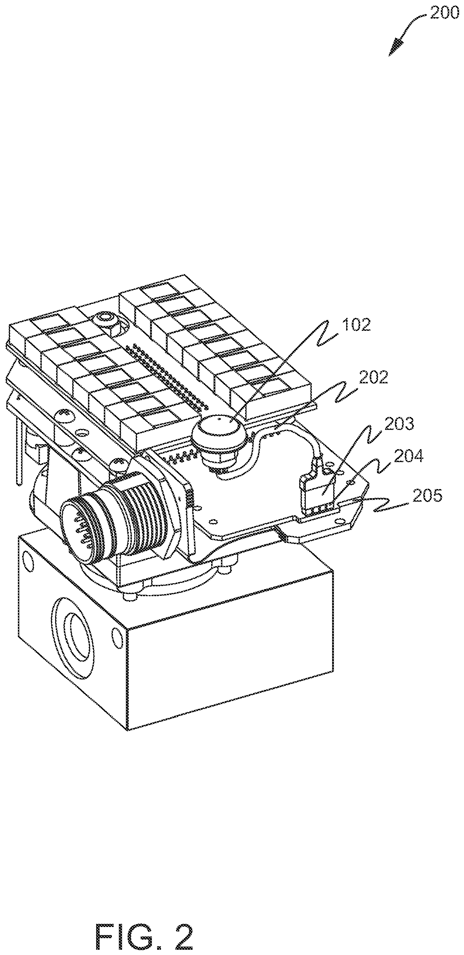

Fig. 2 is a perspective view 200 of the gas sensor apparatus with covering 101 and housing 104 removed. Liquid tight pushbutton 102 when depressed provides a temperature compensated pressure readout. Pushbutton cable 202 and connector 203 enables electrical communication between the pushbutton and the electronics on board the gas sensor apparatus. Connector 203 interconnects with processor PCB pushbutton connector 204. Processor printed circuit board 205 is illustrated in Fig. 2.

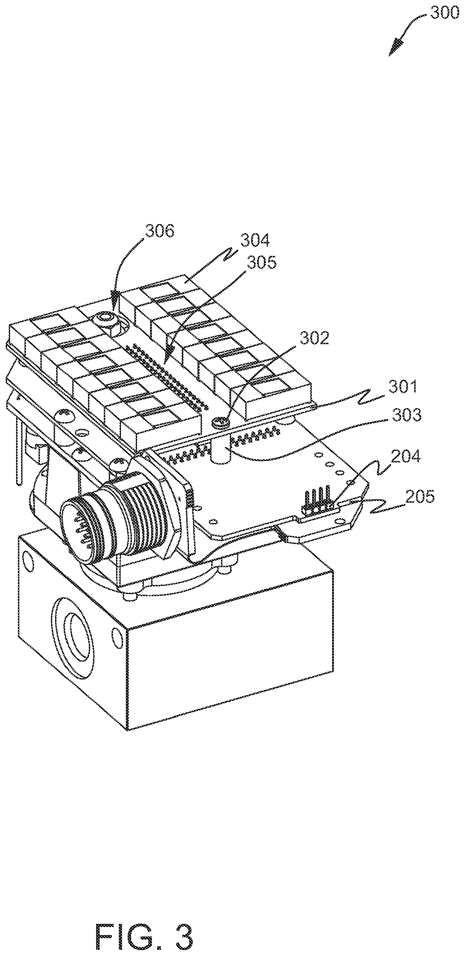

Fig. 3 is a perspective view 300 of the gas sensor apparatus similar to Fig. 2 with the pushbutton removed. Display printed circuit board 301 is illustrated as being mounted to the processor printed circuit board 205 using a standoff (spacer 303) and screw 302. Display digits 304 communicate a temperature compensated pressure readout (display). In the approximate middle of the printed circuit board 301, are processor printed circuit board connectors. The display printed circuit board includes a coil spring clearance hole 306.

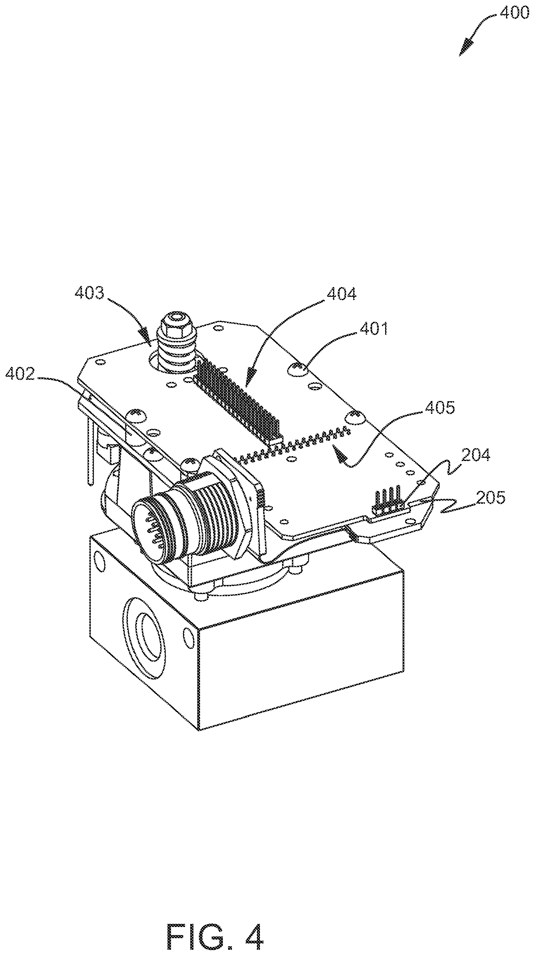

Fig. 4 is a perspective view 400 of the gas sensor apparatus similar to Fig. 3 with the display printed circuit board removed. The temperature sensors 1308A-D, are best viewed, diagramatically in Fig. 13. The temperature sensors will be located in the sensor housing in various places so as to obtain accurate temperature readings representative of the gas being measured. A typical gas used in switchgear is sulfur hexafluoride gas ($SF_6$). $SF_6$ plays a crucial arc-suppression role in this equipment. Other gases may be used in the switchgear. Further, this invention is equally applicable to the determination of loss of any gas from any containment structure. As described in further detail hereinbelow, the loss of gas is determined by a change in the temperature compensated pressure.

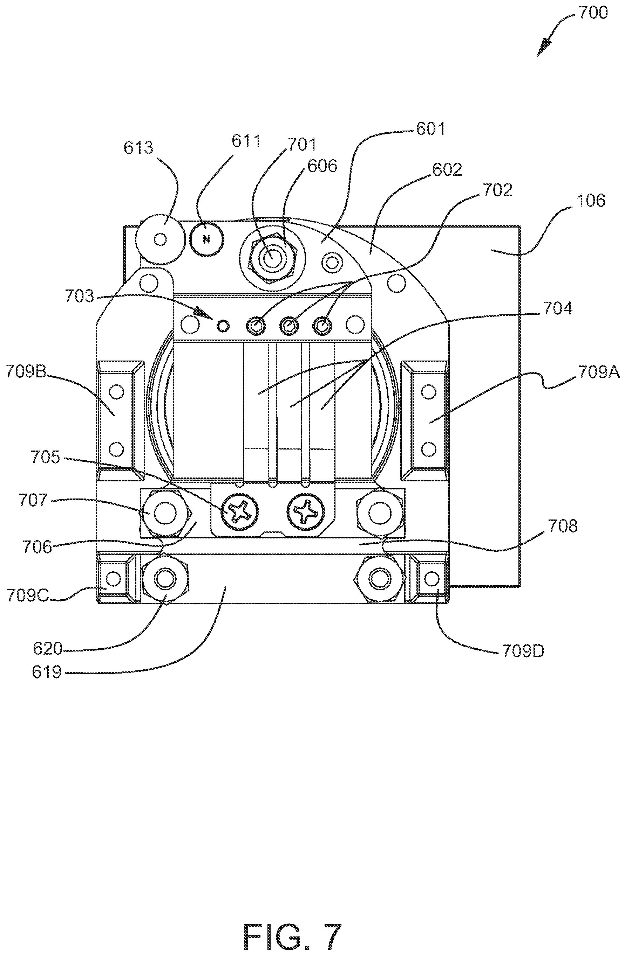

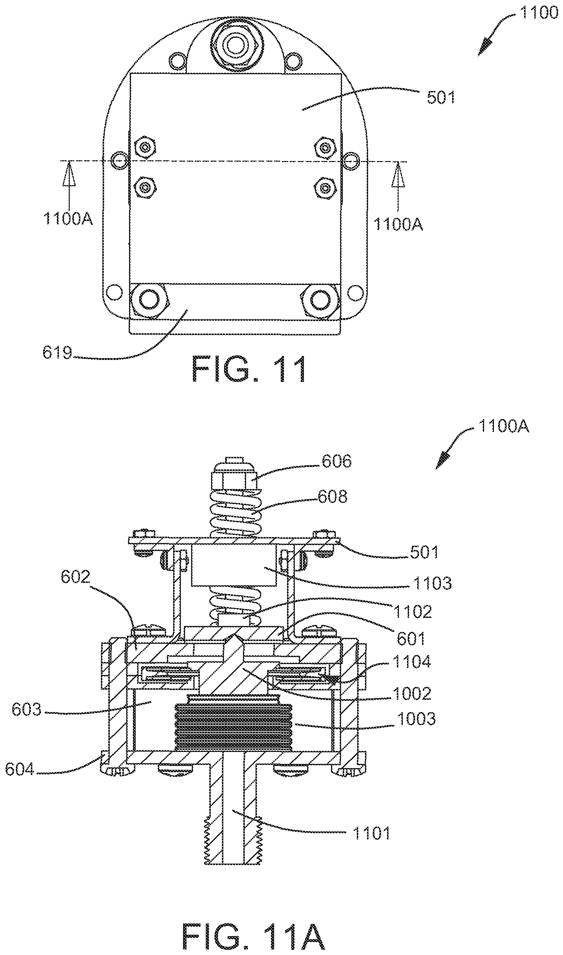

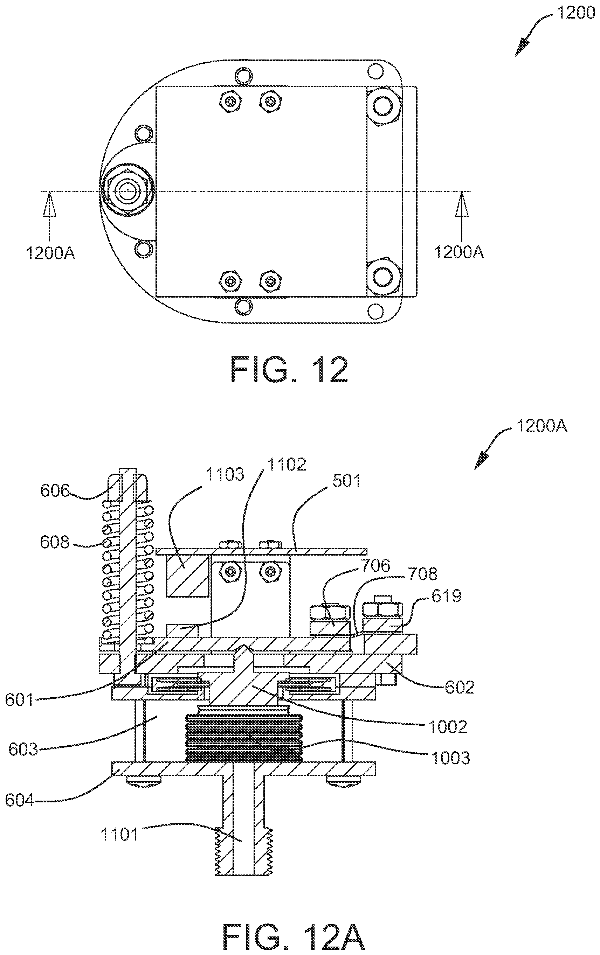

Referring to Figs. 11, 11A, 12, and 12A, some of the important internal elements of the invention are disclosed. Fig. 11 is a top view 1100 of gas sensor apparatus internal components. Fig. 11A is a cross-section view 110A of Fig. 11. Fig. 12 is a top view 1200 of the gas sensor apparatus internal components. Fig. 12A is a cross-sectional view 1200A of the gas sensor apparatus of Fig. 12. Switch printed circuit board 501 includes a microcontroller unit 1103, 1301. Base plate 602 is affixed to the adapter flange 604 by unnumbered screws. Lever 601 pivots about a pivot portion (unnumbered) of the coupling 1002 of the bellows 1003. Stabilizers 1104 of the coupling 1002 tend to center the coupling 1002 of the bellows as the bellows is raised and lowered in response to pressure within the bellows. Gas port 1101 communicates gas into the bellows 1003. Riser 603, adapter flange 604, base plate 602 provide a foundation for operation of the lever 601. Lever 601 pivots about coupling 1002. Bimetallic strip 708 (element) is affixed to the lever 601 by retaining plate 706. Bimetallic strip 708 is also affixed to an unnumbered block by retaining plate 619. Fig. 7 illustrates the bimetallic strip 708 and notches cut therein for desired performance thereof. The material of the bimetallic strip 708 is not limited in this specification. The bimetallic strip functions to compensate for the influence the temperature of the gas has on gas pressure.

One important object of the invention is to determine if gas is being loss from the switchgear. The gas sensor apparatus operates over a wide range of temperature and pressure conditions other than standard temperature and pressure conditions. If pressure of the gas rises, but the mass of the gas within a known volume stays the same (ie no loss occurs), then the apparent pressure in the volume (tank) appears to increase. The bimetallic strip 708, however, adds a downward force on lever 601 to counteract the additional force of the gas within the bellows due to an increase in gas temperature. If pressure of the gas decreases, but the mass of the gas within a known volumes stays the same (ie no loss of gas occurs), then the apparent pressure in the volume (tank) appears to decrease. In a similar manner, an apparent decrease in gas pressure due to a relatively low temperature is compensated by an upward force on lever 601 to counteract the reduction in force of the gas within the bellows due to a decrease in gas temperature.

A magnet is affixed to the lever 601. A reflective surface is also affixed to the lever 601. A Hall Effect sensor is applied to the switch printed circuit board 501. A reflective object sensor is affixed to the switch printed circuit board. In Fig. 12A, reference numeral 1102 is being used to denote the magnet and the reflective surface. In Fig. 12A, reference numeral 1103 is being used to denote the Hall Effect sensor, the reflective object sensor and the processor module.

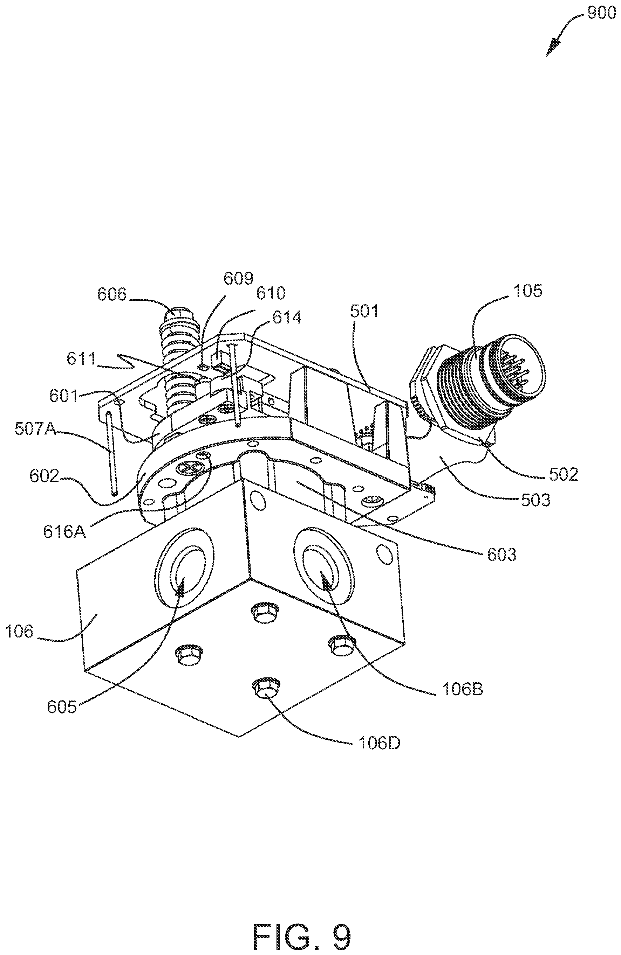

Fig. 9 is a bottom perspective view 900 of the gas sensor apparatus. Hall Effect sensor 609 and reflective object sensor 610 are illustrated in Fig. 9 on the underside of switch printed circuit board 501. Magnet 611 and reflective surface boss 614 are illustrated residing on lever 601. Lever 601 moves vertically with a small amount of pivotal movement as well as can be visualized in Fig. 12. As lever 601 moves, the Hall Effect sensor 609 and the reflective object sensor 610, detect the movement. Processor 1301 is not visualized in Fig. 9, but it can reside on the underside of printed circuit board 501 as illustrated in Fig. 12A. Alternatively, processor 1301 can be located on the upper or top side of printed circuit board 501.

Referring to Fig. 13, processor 1301 receives temperature inputs from temperature probes within the sensor housing and processes the various temperature signals for further evaluation of the pressure information received from the high resolution displacement transducers 1310. Reference numeral 1310 indicates that "OPTION X" displacement transducer(s) may be used. This means that one or both of the Hall Effect sensor and/or the reflective object sensor may be used in the calculation of movement of the lever. It also means alternative displacement or distance sensing technologies including capacitive, sonic, inductive, or other well known technologies may be used singly or in combination. Movement of the lever in combination with the use of temperature data, determines the gas density. In this patent application, various parameters are expressed by the ideal gas law stated above.

$$pV = nRT \therefore \frac{n}{V} = \frac{p}{RT}$$

Where P is gas pressure in the system, V is the volume of gas which is fixed by the equipment's rigid tank, R is a constant, T is temperature, and n is the mass quantity of gas. With V and R constant, measuring P and T determines n / V, the gas density.

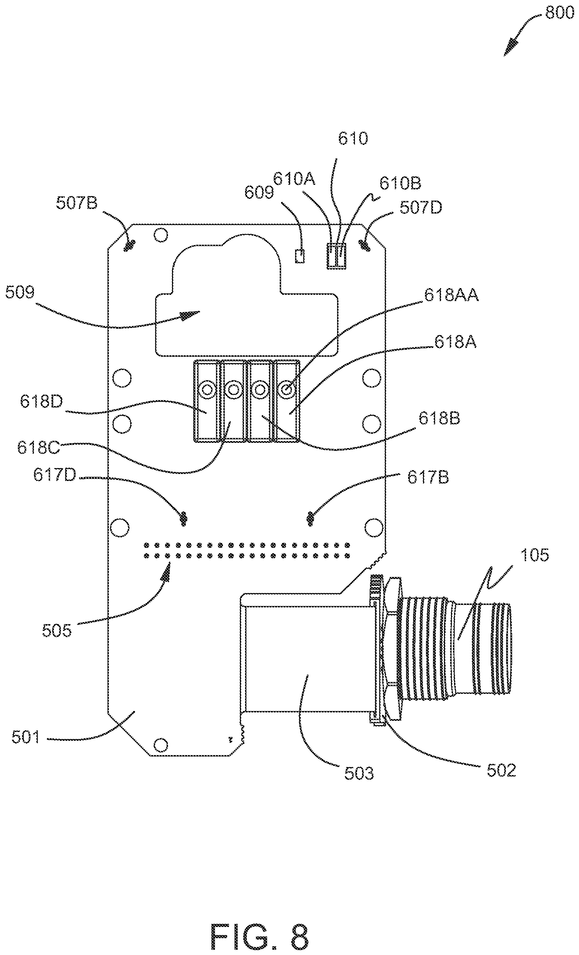

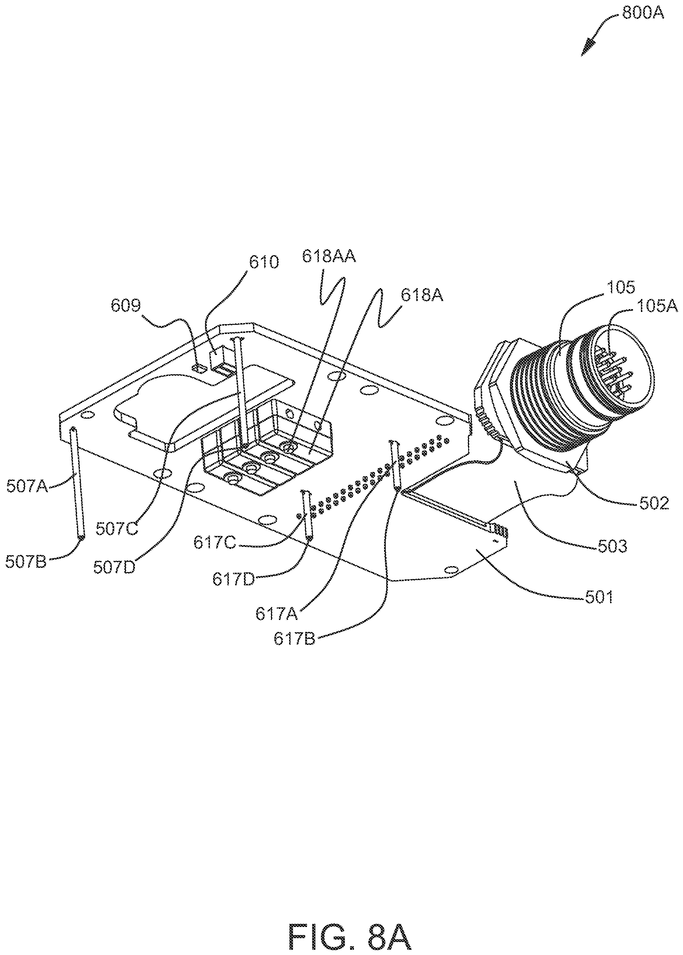

The gas sensor apparatus includes switch actuator elements 704 which reside on lever 601 which engage the actuators 618AA of snap action switches 618A-D as illustrated in Fig. 8. Fig. 8 is a bottom view 800 of the printed circuit board 501. Switches 618A, 618B, 618C and 618D protrude downwardly from printed circuit board 501. Each switch includes an actuator 618AA although only one such actuator is labeled with reference numeral 618AA. When the actuator elements 702 engage the actuators 618AA, then contacts within the switch are electrically joined or completed which results in an alarm, warning, or other signal sent to a user. These switch functions include the temperature compensation provided by the bimetallic strip. Hall Effect sensor 609, reflective object sensor 610, reflective object sensor phototransistor 610A, and reflective object sensor infrared LED emitter 610B are illustrated in Fig. 8.

Fig. 8A is a bottom perspective view 800A of the switch printed circuit board 501 wherein the sensor connector 105 and the sensor connector contact pin 105A are illustrated along with the printed circuit board 501. Connector support 502 is affixed to PCB flexible circuit element 503. First 507B and second 507D thermistors are illustrated in Fig. 8A as are third 617B and fourth 617D thermistors. First thermistor stalk 507A and second thermistor stalk 507C are illustrated well in Fig. 8A. Third thermistor stalk 617B and fourth thermistor stalk 617C are illustrated well in Fig. 8A.

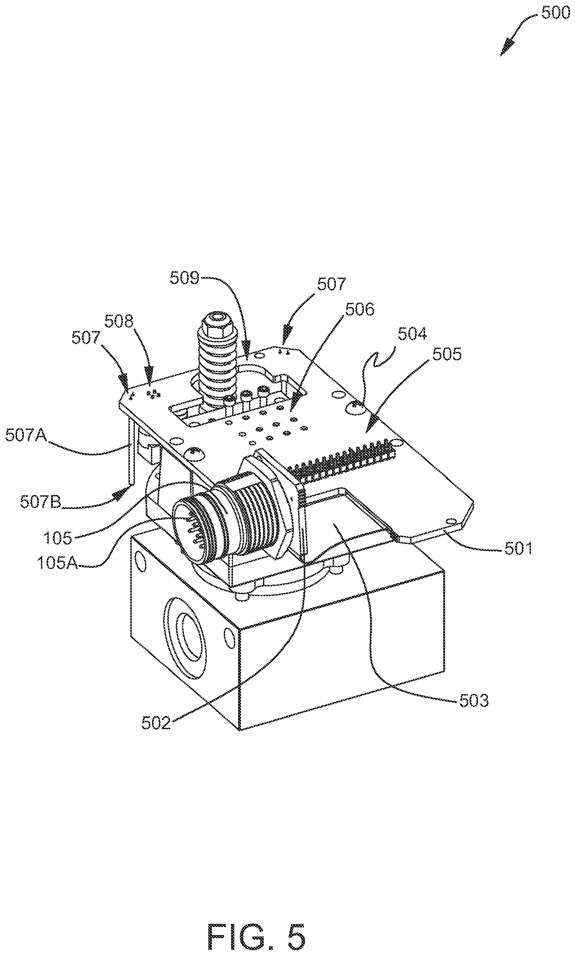

Fig. 5 is a perspective view 500 of the gas sensor apparatus similar to Fig. 4 with the processor printed circuit board 205 removed. Reference numeral 501 is the switch printed circuit board and reference numeral 502 is the switch printed circuit board connector. Flexible circuit element 503 is interconnects the connector 502 to the switch printed circuit board 501. Screws 504 retain the printed circuit board to the main structure of the apparatus. Switch connections 506 are viewed in Fig. 5 and enable attachment of the snap-action switches from the bottom side of the printed circuit board 501. The bottom side of printed circuit board is best viewed in Figs. 8 and 8A. Each of the switches 618A-D is actuated by spring loaded metallic actuator elements 704 best viewed in Fig. 7. The spring loaded actuator elements 704 are very slightly bowed depending on the amount of adjustment 702 which bias the elements 704 and, therefore, control the actuation of the switches. The spring loaded elements 704 are affixed to bimetallic hinge retaining plate 706. Still referring to Fig. 7, the reflector 613, the magnet 611, and the spring stud 701 are illustrated.

Fig. 7 is a top view 700 of the of the gas sensor apparatus as illustrated in Fig. 6 with the printed circuit board 501 removed illustrating the lever 601 and switch actuator elements. Manifold block 106, lever 601, base plate 602, coil spring nut 606, spring stud 701, switch PCB mounting bosses 709A-D, 611 magnet, reflective surface 613, bimetal hinge base retaining plate 619, bimetal hinge base retaining plate nut 620, switch actuator element adjuster screws 702, switch actuator elements 704, switch actuator elements flange screw 705, bimetal hinge lever retaining plate 706, bimetal hinge lever retaining plate nut 707 and bimetal hinge 708 are all well illustrated in Fig. 7.

Referring to Fig. 5 again, thermistor 507A, thermistor stalk 507B and thermistor connections 507 are illustrated. Further, the connection 508 for the reflective object sensor and the cutout 509 for the coil spring are shown.

Fig. 6 is a left side view 600 of the gas sensor apparatus of Fig. 5. Fig. 6 illustrates manifold block 106, switch PCB 501, switch PCB processor PCB connector 506, first thermistor stalk 507A, first thermistor 507B, third thermistor stalk 507C, and third thermistor 507D. Lever 601, base plate 602, riser 603, and adapter flange 604 are illustrated in Fig. 6. Second gas port 605, coil spring nut 606, coil spring washer 607 and coil spring 608 are illustrated in Fig. 6 as well. Riser 603 is generally cylindrically shaped and extends from the adapter flange 604 to the base plate 602.

Fig. 6A is an enlarged portion 600A of Fig. 6. Fig. 6A illustrates the lever 601, the Hall Effect sensor 609, the reflective object sensor 610, the magnet 611, the magnet boss 612, the reflective surface 613, the reflective surface boss 614, the ball 615, and the ball spring adjuster 616.

Fig. 6B is a right side view 600B of the gas sensor apparatus of Fig. 5. Switches 618A-D are illustrated attached to the switch printed circuit board 501. Switch PCB connector PCB 502 and the switch PCB flexible circuit element 503 are illustrated in Fig. 6B as well. Third 617B and fourth 617D thermistors are illustrated along with their respective stalks 617A, 617C.

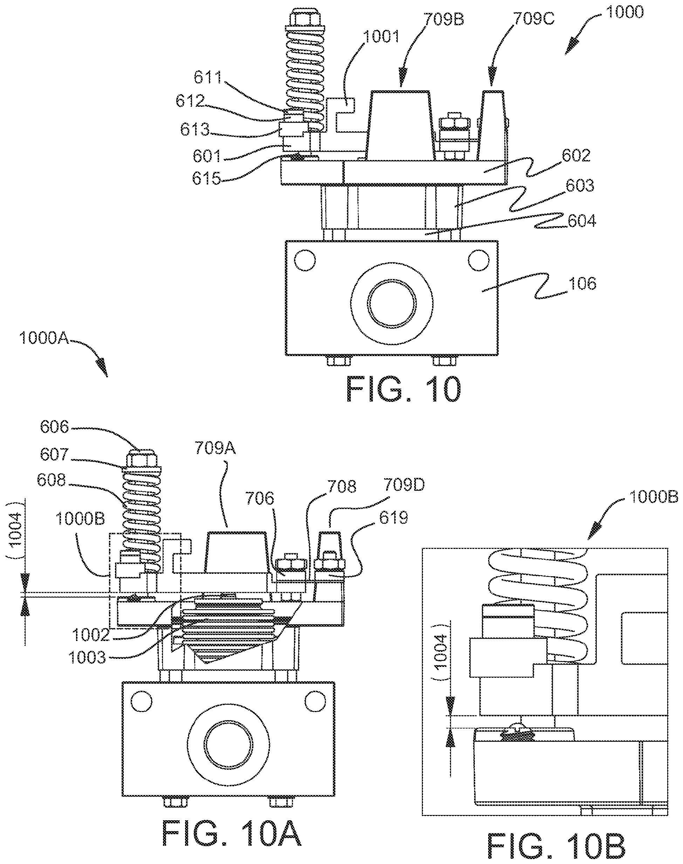

Fig. 10 is a front view 1000 of the sensor internal components. Ball 615 is illustrated in Fig. 10 as is switch actuator element adjuster screw boss 1001. Fig. 10A is front view 1000a of the gas sensor apparatus internal components with the riser cutaway illustrating the bellows 1003. Bellows lever coupling 1002 is illustrated in Fig. 10A in engagement with lever 601. Lever 601 is movable vertically depending on the pressure applied to the bellows and depending on the action of the bimetallic hinge. As shown in Figs. 10 and 10A, gap 1004 is the distance between the lever 601 and the ball 615, in other words reference numeral 1004 is the lever displacement dimension.

Fig. 10B is an enlargement 100B of a portion of Fig. 10A illustrating the gap 1004 between the lever 601 and the spring loaded ball 615. As illustrated in Figs. 10, 10A and 10B, vertically movable lever 601 is positioned by virtue of pressure greater than 413685 $m^{-1}.kg.s^{-2}$ and less than 565 370 m-1.kg.s-2 (60 psig and less than 82 psig). The ideal gas law restated:

$$(1) \qquad pV = nRT \quad \therefore n = \frac{pV}{RT}$$

p = absolute pressure ($m^{-1}.kg.s^{-2}$ (pounds per square inch or psi))
V = volume (cubic meters)
T = temperature (Kelvin)
n = gas quantity in moles (mol)
R = gas constant = 1.2095 x $10^{-3}$

It should be noted that, p, the pressure in (1) is the absolute pressure (reference to a vacuum) which differs by atmospheric or barometric pressure from the pressure indicated by a typical gauge in atmospheric conditions. This can be stated mathematically as:

$$(3) \qquad p = p_{abs} = p_g + p_{atm}$$

p = $p_{abs}$ = absolute pressure ($m^{-1}.kg.s^{-2}$ (psi))
pg = gauge pressure ($m^{-1}.kg.s^{-2}$ (psi))
$p_{atm}$ = atmospheric pressure ($m^{-1}.kg.s^{-2}$ (psi))

With n the gas quantity in mol known, the mass quantity for a particular gas is derived from its molar weight:

$$(4) \qquad m = nM_m$$

m = gas quantity in grams (g)
n = gas quantity in moles (mol)
$M_m$ = molar mass of gas species (g/mol)

A sequence of measurements of gas mass $m_i = m_1, m_2, ... m_j$ can be derived using corresponding sequences of pressure $p_i$ and temperature $T_i$ measurements given only that the volume V, atmospheric pressure $p_{atm}$, and gauge pressure $p_g$ corresponding to each point in the sequence are known. A change in gas mass foretells a leak when a measurement $m_j$ is less than a measurement $m_k$ made sometime earlier (k < j). Conversely, the addition of gas is detected when $m_j$ is greater than $m_k$. In a non-leaking system, all of the $m_i$ will be substantially equal.

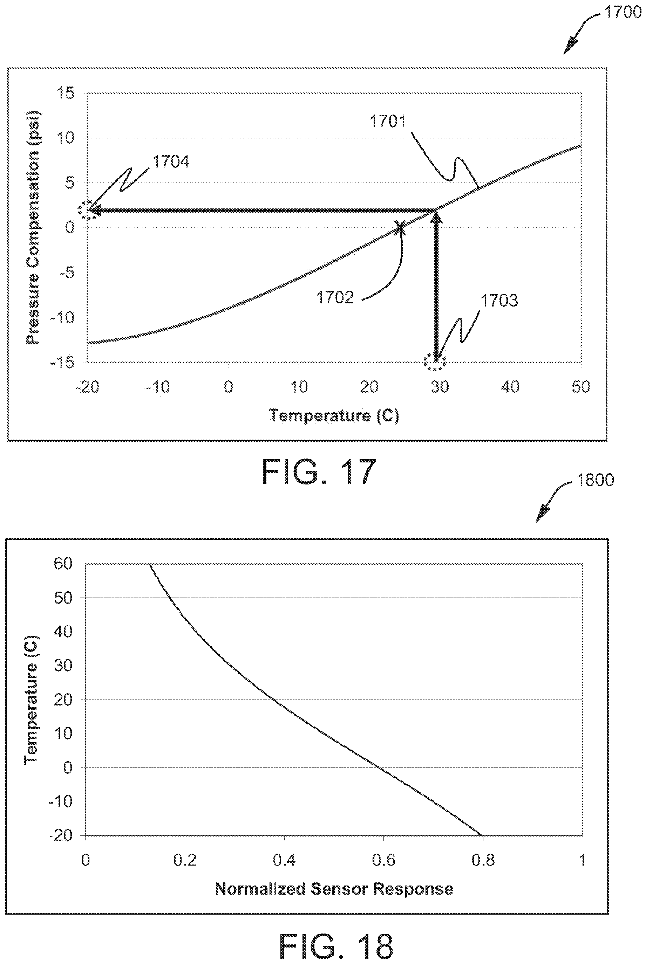

Acquiring temperature sequence $T_i$ begins by microcontroller 1301 using analog to digital converter 1303 applied to temperature interface 1307 accessing temperature probes 1308A through 1308D to acquire raw sensor measurements. Raw sensor measurements are then converted to accurate temperature readings through a calibration process such as that depicted in Fig. 18 wherein sensor response is converted to temperature in degrees centigrade for each sensor. Centigrade temperatures are converted to requisite absolute temperatures by addition of the offset 273.15 degrees. A point $T_i$ can then be recorded as a particular weighted average of the different sensor's derived absolute temperatures. In the preferred embodiment, the temperature sensors 1308A through 1308D correspond to thermistors 507B, 507D, 617B, and 617D.

Acquiring pressure sequence pi is somewhat more involved. It begins again with microcontroller 1301 using analog to digital converter 1303 applied to displacement interface 1309 accessing high resolution displacement transducer 1310 to acquire raw displacement sensor measurements. Unlike temperature measurements, there is no simple transformation of raw displacement measurements to absolute pressure, however. Firstly, a raw displacement sensor measurement is utilized by the MCU to compute calibrated lever displacement dimension according to calibration data such as that depicted in Fig. 16. In a preferred embodiment, the high resolution displacement transducer is the combination of a reflective object sensor 610 in combination with a reflective surface 613. In this case sensor response is calibrated using data such as that of curve 1601. In another embodiment, the high resolution displacement transducer is the combination of Hall Effect sensor 609 in combination with magnet 611. In this case sensor response is calibrated using data such as that of curve 1602.

Once calibrated lever displacement dimension is derived, initial gauge pressure estimate can be computed using secondary calibration data as depicted in Fig. 15. For example, if Hall Effect sensor response is measured to be 0.55 (1603), lever displacement dimension is determined to be 0.660 mm (0.026 inch) (1604). This lever location 0.660 mm (0.026 inch) can be transferred to the graph of Fig. 15 (1503) and used to determine an initial gas gauge pressure estimate of 565 370 $m^{-1}.kg.s^{-2}$ (82 psi) (1604).

The intrinsic temperature compensation of the lever system comprising bi-metal hinge 708 must now be taken into account. In the absence of the bi-metal element, lever position would simply track temperature variations. For the fixed volume V, gas pressure increases proportional to increasing temperature (and vice versa). With only the resistance of coil spring 608, lever dimension 1004 would increase proportionately with the varying force exerted by bellows 1003. The bi-metal element is conceived to neutralize this temperature induced pressure variation. As temperature increases, the bi-metal exerts approximately equal magnitude equal force directed oppositely to the increased upward force of the bellows with the approximate result that the lever dimension remains constant. The converse occurs as temperature decreases. These mechanics alone allow the mechanism to operate as a low resolution density monitor wherein eventual changes in lever position represent approximate changes in gas mass (as opposed to pressure variations due to temperature), and, for fixed volume V, gas density. With the advent of the microcontroller in the present invention, it is possible to improve accuracy and flexibility of gas monitoring including the electronic measurement of pressure, temperature, gas content, and gas density as explained above.

To complete the derivation of absolute gas pressure p from displacement and temperature sensor measurements, the initial gas gauge pressure estimate as above must itself be compensated for the temperature behavior introduced by the bi-metal element. The appropriate compensation is derived from the data in Fig. 17 using temperature Ti as above. For example, if Ti is 303K corresponding to a temperature of 29.85C (1703), a temperature compensation of approximately 13 789.5 $m^{-1}.kg.s^{-2}$ (2 psi) is indicated (1704). Therefore, in the current example, a calibrated gauge pressure is computed equal to 565 370 $m^{-1}.kg.s^{-2}$ + 13 790 $m^{-1}.kg.s^{-2}$ equals 579 160 $m^{-1}.kg.s^{-2}$ (82 psi + 2 psi equals 84 psi). A reasonable estimate of atmospheric pressure is used based on typical or measured data. An example of a typical value for atmospheric pressure is 101 352.9 $m^{-1}.kg.s^{-2}$ (14.7 psi). The measurement of absolute pressure $p_i$ is computed as the sum of the gas gauge pressure and the atmospheric pressure, 680 512.5 $m^{-1}.kg.s^{-2}$ (98.7 psi) in the example.

To complete the example, given a typical tank volume V of 1 cubic meter, along with a molar mass for $SF_6$ gas of 146.055 g/mol, the gas mass $m_i$ is computed according to (1) and (4) to be 38.62 kg. The entire process is implemented by microcontroller 1301 in combination with the electronic elements of Fig. 13 and is represented in block diagram form in Fig. 14. All data described above is recorded in microcontroller memory including the raw sensor measurements through the final derived measurement sequences $T_i$, $p_i$, and $m_i$.

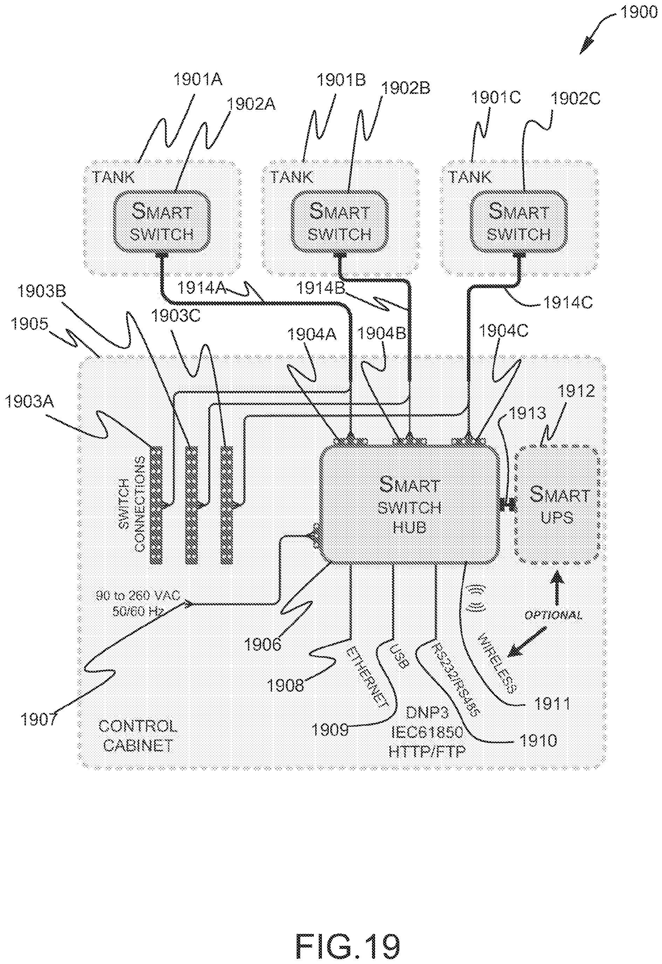

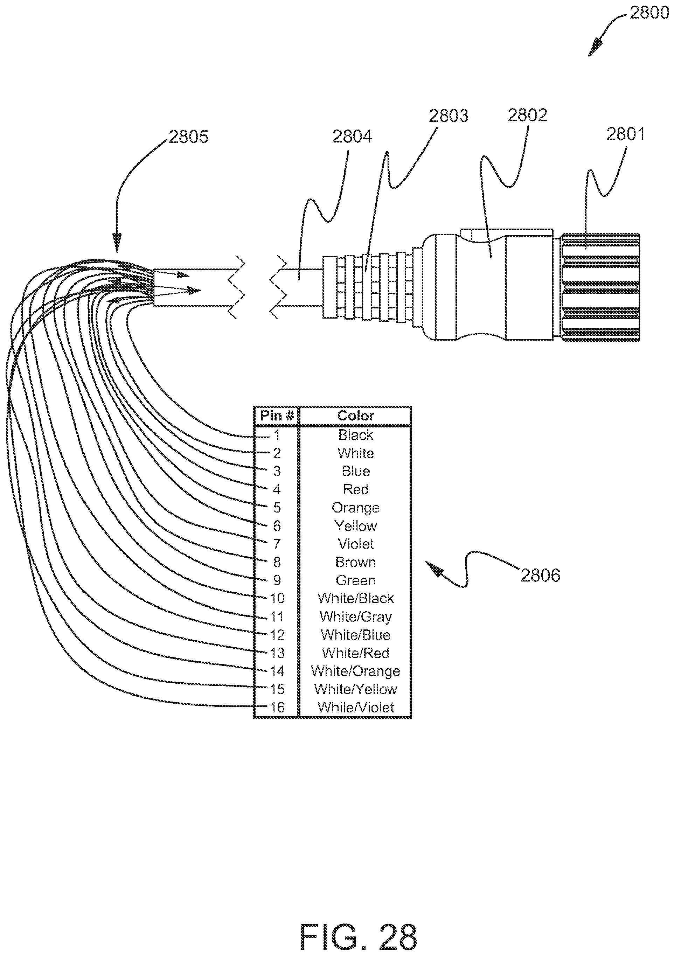

In one embodiment of the invention, the gas sensor system utilizes a gas sensor apparatus mounted to the gas tank and connected via a multi-conductor cable (Fig. 28) to a gas sensor hub module (hub) mounted inside a breaker control cabinet. This embodiment is shown in schematic fashion in Fig. 19.

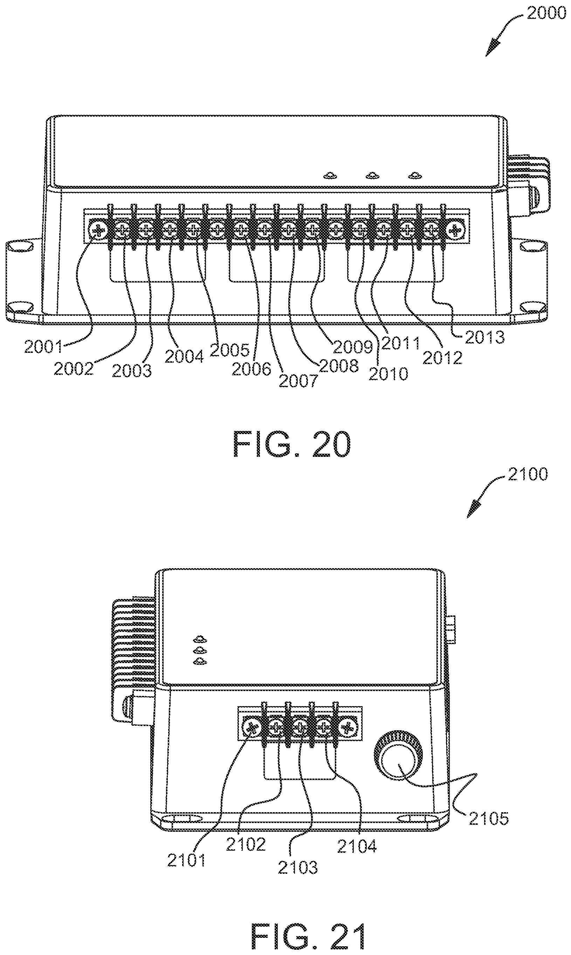

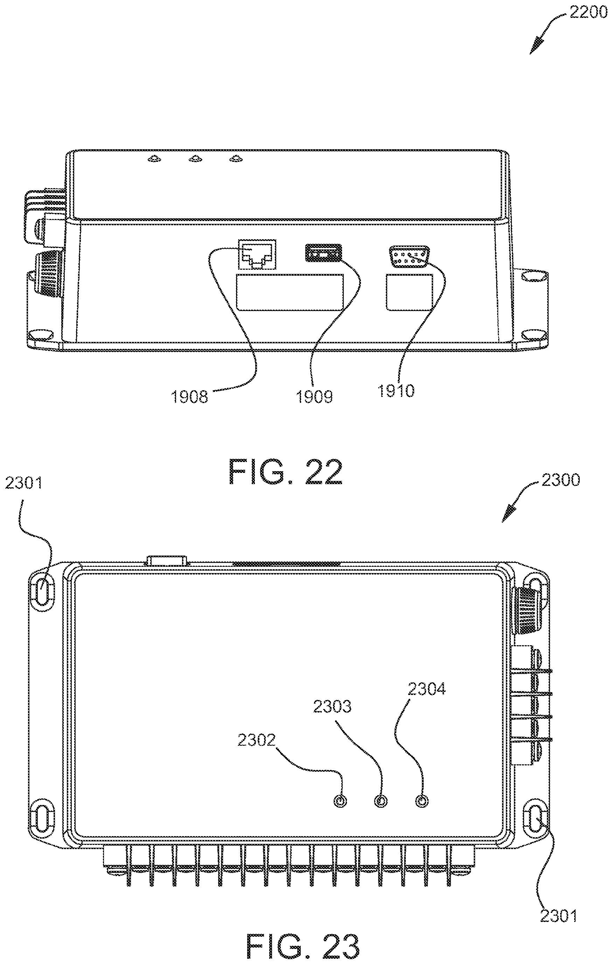

Fig. 20, 21, 22, and 23 show various interfaces and mounting provisions of the hub. The hub is an important aspect of the instant invention. A single hub can interface multiple gas sensor apparatuses (three a least, one for each phase of a 3-phase electrical distribution system). The hub can also interface computers used by service personnel as well as the network management system of the operating company using physical and logical communications protocols specifically adapted and standardized by the industry for those purposes.

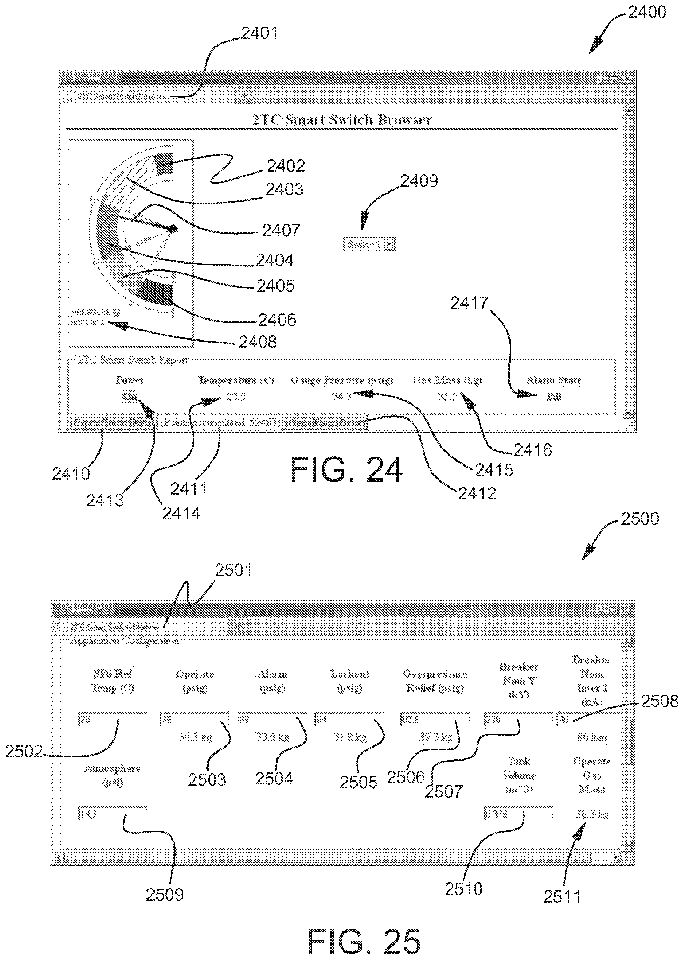

Fig 24 shows a graphical display of a human interface component where a human observer can easily visualize operating variables monitored and computed by the gas sensor system. These variables include power status, temperature, gauge pressure, gas mass, alarm status, and temperature compensated gas pressure.

Fig 25 is another graphical display of a human interface component where a human operator can select various operating values that control the operating of the gas sensor system. These operating values include a reference temperature, pressure settings for operate, alarm, lockout, and over pressure thresholds, nominal breaker voltage and current, atmospheric pressure, and breaker gas tank volume. The value of gas mass corresponding to the operate pressure setting, the reference temperature setting, and the tank volume setting is computed and displayed.

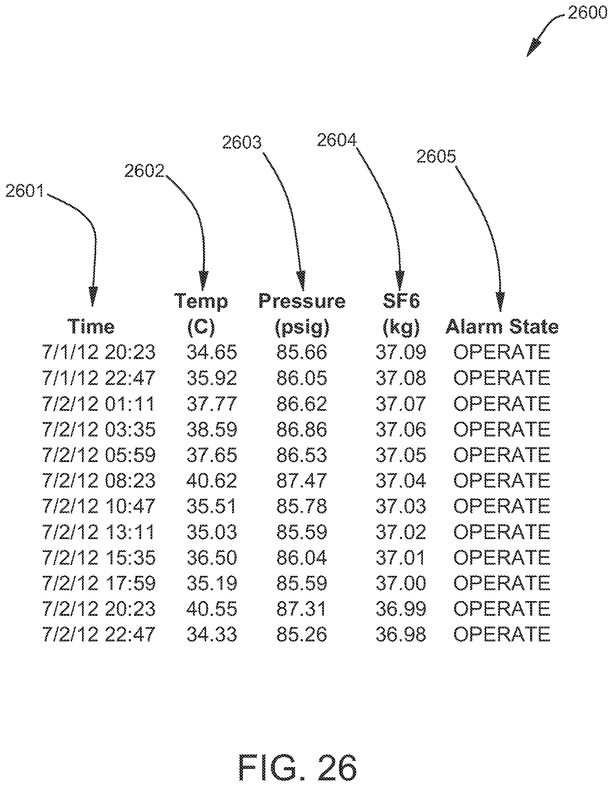

As described above, the gas sensor system records measured and computed data in time. Fig. 26 shows a typical, tabular presentation of such data including temperature, pressure, gas mass, and alarm state for each instant in time (each row in the table).

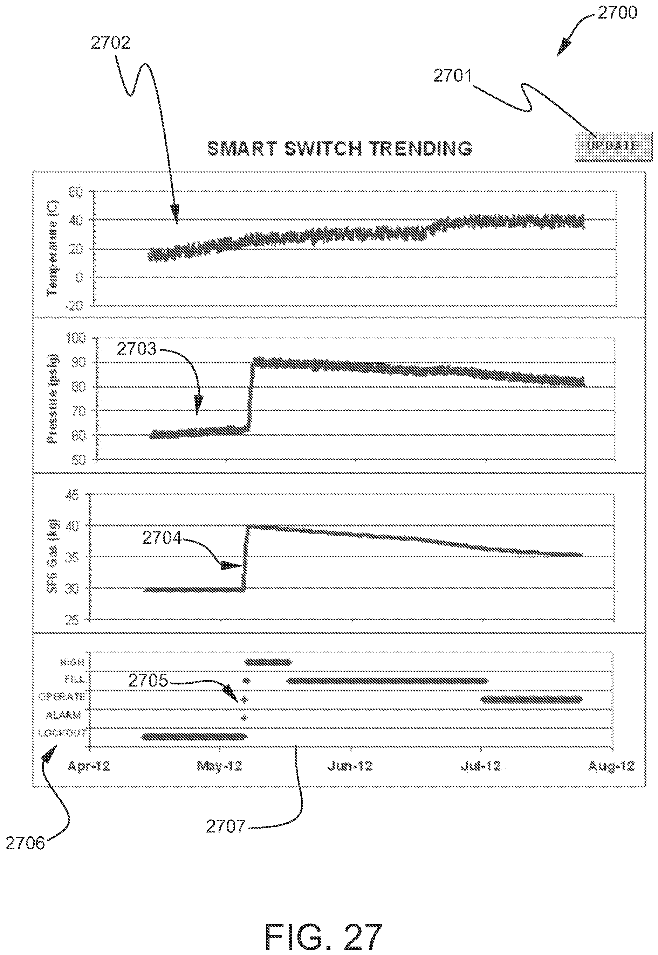

The recorded data can be view graphically as well. This is shown in Fig. 27.

Reference numerals:

| | |
|---|---|
| 100 | perspective view of sensor |
| 101 | cover |
| 102 | liquid tight pushbutton |
| 103 | cover retaining screw |
| 104 | housing |
| 105 | sensor connector |
| 105A | sensor connector contact pin |
| 105B | connector nut |
| 106 | manifold block |
| 106A | manifold block bolt hole |
| 106B | first gas port |
| 107 | display deadfront |
| 107A | deadfront gasket edge |
| 200 | perspective view of the sensor with cover and housing removed |
| 202 | pushbutton cable |
| 203 | pushbutton cable connector |
| 204 | processor PCB pushbutton connector |
| 205 | processor PCB |
| 204 | processor PCB pushbutton connector |
| 205 | processor PCB |
| 300 | perspective view of the sensor with pushbutton removed |
| 301 | display PCB |
| 302 | display PCB retaining screw |
| 303 | display PCB standoff |
| 304 | display digit |
| 305 | display PCB processor PCB connector |
| 306 | display PCB coil spring clearance hole |
| 204 | processor PCB pushbutton connector |
| 205 | processor PCB |
| 400 | perspective view of the sensor with display PCB removed |
| 401 | processor PCB retaining screw |
| 402 | processor PCB standoff |
| 403 | processor PCB coil spring clearance hole |
| 404 | processor PCB display PCB connector |
| 405 | processor PCB switch PCB connector |
| 105 | sensor connector |
| 105A | sensor connector contact pin |
| 500 | perspective view of the sensor with processor PCB removed |
| 501 | switch PCB |
| 502 | switch PCB connector PCB |
| 503 | switch PCB flexible circuit element |
| 504 | switch PCB retaining screw |
| 505 | switch PCB processor PCB connector |
| 506 | switch connections |
| 507 | thermistor connections |
| 507A | thermistor |
| 507B | thermistor stalk |
| 508 | reflective object sensor connection |
| 509 | switch PCB coil spring and switch adjustment clearance cutout |
| 507A | first thermistor stalk |
| 507B | first thermistor |
| 507C | third thermistor stalk |
| 507D | third thermistor |
| 600 | left side view of the sensor internal components |

| | |
|---|---|
| 600A | detail of lever and displacement mechanisms |
| 600B | right side view of the sensor internal components |
| 600A | detail of lever and displacement mechanisms |
| 601 | lever |
| 602 | base plate |
| 603 | riser |
| 604 | adapter flange |
| 605 | second gas port |
| 606 | coil spring nut |
| 607 | coil spring washer |
| 608 | coil spring |
| 601 | lever |
| 609 | Hall effect sensor |
| 610 | reflective object sensor |
| 611 | magnet |
| 612 | magnet boss |
| 613 | reflective surface |
| 614 | reflective surface boss |
| 615 | ball |
| 616 | ball spring adjuster |
| 617A | third thermistor stalk |
| 617B | third thermistor |
| 617C | fourth thermistor stalk |
| 617D | fourth thermistor |
| 618A | first switch |
| 618B | second switch |
| 618C | third switch |
| 618D | fourth switch |
| 619 | bimetal hinge base retaining plate |
| 620 | bimetal hinge base retaining plate nut |
| 700 | top view of the sensor lever and switch actuator elements |
| 701 | coil spring stud |
| 702 | switch actuator element adjuster screws |
| 703 | unused actuator element adjuster screw threaded hole |
| 704 | switch actuator elements |
| 705 | switch actuator elements flange screw |
| 706 | bimetal hinge lever retaining plate |
| 707 | bimetal hinge lever retaining plate nut |
| 708 | bimetal hinge |
| 709A | first switch PCB mounting boss |
| 709B | second switch PCB mounting boss |
| 709C | third switch PCB mounting boss |
| 709D | fourth switch PCB mounting boss |
| 800 | bottom view of switch PCB |
| 800A | perspective view of switch PCB from bottom |
| 900A | perspective view of sensor internal components from bottom |
| 1000 | front view of sensor internal components |
| 1001 | switch actuator element adjuster screw boss |
| 1000A | front view of sensor internal components with riser cutaway |
| 1000B | front view of lever displacement detail |
| 1002 | bellows lever coupling |
| 1003 | bellows |
| 1004 | lever displacement dimension |
| 1004 | lever displacement dimension |
| 1100 | top view of sensor internal components |
| 1100A | crosssection view from right side of sensor internal components |
| 1101 | gas port |
| 1102 | sensor module |

| 1103 | processor module |
|------|------|
| 1104 | stabilizer |
| 1200 | top view of sensor internal components |
| 1200A | crosssection view from front of sensor internal components |
| 1300 | hardware block diagram |
| 1301 | MCU (microcontroller unit) |
| 1302 | communication subsystem |
| 1303 | analog to digital converter subsystem |
| 1304 | digital to analog converter subsystem |
| 1305 | digital I/O interface subsystem |
| 1306 | safety limit detection subsystem |
| 1307 | temperature interface |
| 1308A | first temperature sensor |
| 1308B | second temperature sensor |
| 1308C | third temperature sensor |
| 1308D | fourth temperature sensor |
| 1309 | displacement transducer interface subsystem |
| 1310 | high resolution displacement transducer |
| 1311 | battery |
| 1312 | network management controller |
| 1400 | processing block diagram |
| 1401 | raw conversions from displacement and temperature subsystems |
| 1402 | signal to noise enhancement |
| 1403 | displacement to pressure calculation |
| 1404 | pressure calibration |
| 1405 | digital filtering subsystem |
| 1406 | signal processing parameter set |
| 1407 | pressure readings output to gas mass calculations and user interfaces |
| 1500 | lever position as a function of gas pressure at 25C |
| 1501 | lever response from 0 $m^{-1}.kg.s^{-2}$ to 413 685 $m^{-1}.kg.s^{-2}$ (0 psig to 60 psig), ball nose spring plunger operating |
| 1502 | lever response from 413 685 $m^{-1}.kg.s^{-2}$ to 689 476 $m^{-1}.kg.s^{-2}$ (60 to 100 psig) coil spring and bimetal hinge only |
| 1503 | a particular lever position of 0.026" |
| 1504 | a pressure of 558 476 $m^{-1}.kg.s^{-2}$ (81 psig) corresponds to position of 0.660 mm (0.026') |
| 1600 | normalized sensor response as a function of lever position |
| 1601 | response of reflective object sensor |
| 1602 | response of Hall effect sensor |
| 1603 | a particular HES sensor response of 0.55 |
| 1604 | a particular lever position of 0.660 mm (0.026") corresponds to sensor response of 0.55 |
| 1700 | graph of pressure compensation required as a function of temperature |
| 1701 | pressure compensation required as a function of temperature |
| 1702 | zero compensation required at reference temperature |
| 1703 | a particular temperature |
| 1704 | a particular pressure compensation corresponds to a particular temperature |
| 1800 | graph of temperature as a function of normalized temperature sensor response |
| 1900 | block diagram of the gas sensor system in a 3-phase breaker application |
| 1901A | first breaker tank |
| 1901B | second breaker tank |
| 1901C | third breaker tank |
| 1902A | first gas sensor on first breaker tank |
| 1902B | second gas sensor on second breaker tank |
| 1902C | third gas sensor on third breaker tank |
| 1903A | first switch contact terminal interface for first gas sensor |
| 1903B | second switch contact terminal strip interface for second gas sensor |
| 1903C | third switch contact terminal strip interface for third gas sensor |
| 1904A | first switch hub interface terminal strip for first gas sensor |
| 1904B | second switch hub interface terminal strip for second gas sensor |
| 1904C | third switch hub interface terminal strip for third gas sensor |
| 1905 | breaker control cabinet |

| | |
|---|---|
| 1906 | gas sensor hub module |
| 1907 | power input for gas sensor hub module |
| 1908 | Ethernet interface of sensor hub module |
| 1909 | USB interface of sensor hub module |
| 1910 | serial communications interface of sensor hub module |
| 1911 | wireless network interface of sensor hub module |
| 1912 | uninterruptible power module |
| 1913 | connection between sensor hub module and uninterruptible power module |
| 1914A | first cable interconnecting first gas sensor with first contact and hub terminal strips |
| 1914B | second cable interconnecting first gas sensor with second contact and hub terminal strips |
| 1914C | third cable interconnecting first gas sensor with third contact and hub terminal strips |
| 2000 | side perspective view of a gas sensor hub module |
| 2001 | terminal strip retaining screw |
| 2002 | first terminal of first hub interface terminal strip |
| 2003 | second terminal of first hub interface terminal strip |
| 2004 | third terminal of first hub interface terminal strip |
| 2005 | fourth terminal of first hub interface terminal strip |
| 2006 | first terminal of second hub interface terminal strip |
| 2007 | second terminal of second hub interface terminal strip |
| 2008 | third terminal of second hub interface terminal strip |
| 2009 | fourth terminal of second hub interface terminal strip |
| 2010 | first terminal of third hub interface terminal strip |
| 2011 | second terminal of third hub interface terminal strip |
| 2012 | third terminal of third hub interface terminal strip |
| 2013 | fourth terminal of third hub interface terminal strip |
| 2100 | end perspective view of a gas sensor hub module |
| 2101 | power input terminal strip retaining screw |
| 2102 | first terminal of power input terminal strip |
| 2103 | second terminal of power input terminal strip |
| 2104 | third terminal of power input terminal strip |
| 2105 | fuse of gas sensor hub module |
| 2200 | opposite side perspective view of a gas sensor hub module |
| 2300 | top view of a gas sensor hub module |
| 2301 | mounting flange of gas sensor hub module |
| 2302 | first annunciator of gas sensor hub module |
| 2303 | second annunciator of gas sensor hub module |
| 2304 | third annunciator of gas sensor hub module |
| 2400 | reporting screen of graphical user interface of gas sensor |
| 2401 | identifying tab of reporting page |
| 2402 | overpressure region of graphical pressure indicator |
| 2403 | operating pressure region of graphical pressure indicator |
| 2404 | below fill pressure region of graphical pressure indicator |
| 2405 | alarm pressure region of graphical pressure indicator |
| 2406 | operation lockout pressure region of graphical pressure indicator |
| 2407 | virtual needle pointer of graphical pressure indicator |
| 2408 | reference temperature for graphical pressure indicator |
| 2409 | selection, gas sensor |
| 2410 | export trend data virtual pushbutton |
| 2411 | indicator, number of entries accumulated in the data log |
| 2412 | clear trend data virtual pushbutton |
| 2413 | indicator, power status |
| 2414 | indicator, temperature |
| 2415 | indicator, gauge pressure value |
| 2416 | indicator, calculated gas mass content |
| 2417 | indicator, alarm state |
| 2500 | gas sensor configuration screen of graphical user interface |
| 2501 | identifying tab of configuration page |
| 2502 | selection, reference temperature |

| 2503 | selection, operate pressure threshold |
|---|---|
| 2504 | selection, alarm pressure threshold |
| 2505 | selection, lockout pressure threshold |
| 2506 | selection, over pressure relief threshold |
| 2507 | selection, nominal breaker voltage threshold |
| 2508 | selection, nominal breaker interrupting current threshold |
| 2509 | selection, atmospheric pressure |
| 2510 | selection, tank volume |
| 2511 | indicator, gas mass corresponding to operate pressure at reference temperature |
| 2600 | table of gas sensor numerical data from data log |
| 2601 | data column, time stamp |
| 2602 | data column, temperature |
| 2603 | data column, pressure |
| 2604 | data column, gas mass |
| 2605 | data column, alarm state |
| 2700 | graphical representation of gas sensor numerical data |
| 2701 | update graphical data virtual pushbutton |
| 2702 | graph, temperature versus time |
| 2703 | graph, pressure versus time |
| 2704 | graph, gas mass versus time |
| 2705 | graph, alarm state versus time |
| 2706 | y axis, particular alarm states |
| 2707 | x axis, time |
| 2800 | multi-conductor cable for interconnecting a gas sensor with a gas sensor hub module |
| 2801 | mass termination connector for gas sensor at breaker tank |
| 2802 | over molded connector retainer |
| 2803 | over molded cable strain relief |
| 2804 | multi-conductor cable jacket |
| 2805 | individual conductors with jacket stripped away |
| 2806 | individual conductor color coding for connection to contact and hub terminal strips within control cabinet |

## Claims

1. A gas sensor apparatus, comprising:

a flange (604);
a bellows (1003);
said bellows (1003) supported by said flange (604);
a port (1101), said port (1101) communicating gas between a gas reservoir and said bellows (1003) urging said bellows (1003) in an expanding direction;
a base plate (602), said base plate (602) supported by said flange (604);
a bellows coupling (1002), said bellows coupling (1002) includes a pivot portion;
a movable lever (601);
said bellows (1003) residing between said flange (604) and said bellows coupling (1002);
said bellows coupling (1002) residing between said bellows(1003) and said lever (601), said pivot portion of said bellows coupling (1002) engaging said movable lever (601) displacing said lever (601) in response to the temperature and pressure of said gas;
an adjustable bias mechanism, said bias mechanism engages said lever (601);
a bimetallic element (708), said bimetallic element (708) affixed to said lever (601) and to said base plate (602);
an electronic distance sensor (1310), said electronic distance sensor (1310) includes a first element affixed to said lever (601) and movable therewith, and said sensor includes a second element affixed to said base plate (602);
**characterized in that** the gas sensor apparatus further comprises an electronic microcontroller (1301);
said second element of said electronic distance sensor (1310) detecting said distance between said first element of said electronic distance sensor (1310) and said second element of said electronic distance sensor (1310), said electronic distance sensor (1310) outputting a signal representative of said distance between said first and second elements to said microcontroller (1301);

a temperature sensor (1308), said temperature sensor (1308) outputting a signal representative of said temperature of said bimetallic element (708) and said gas to said electronic microcontroller (1301);
said microcontroller (1301) determining a temperature compensated pressure of said gas within said gas reservoir; and,
said microcontroller (1301) determining the gas density within said gas reservoir.

2. An apparatus as claimed in claim 1, wherein said electronic distance sensor (1310) is a Hall Effect sensor (609), and, wherein
said first element of said electronic sensor (609) is a magnet and said second element of said electronic distance sensor (1310) measures the voltage due to presence and strength of the magnetic field of the magnet.

3. An apparatus as claimed in claim 1, wherein said electronic distance sensor (1310) is a reflective object sensor, and, wherein said first element of said electronic sensor is a reflective surface and said second element of said electronic distance sensor (1310) is a phototransistor in combination with an LED emitter, and said phototransistor measures the distance between the first and second elements.

4. A gas sensor apparatus as claimed in claim 1, further comprising:
a gas sensor hub module, said gas sensor hub module includes:

   an enclosure with mounting flanges and holes;
   a terminal strip to interface said microcontroller (1301);
   a terminal strip to interface electrical power;
   an interface port;
   an interconnecting cable assembly comprising
   a connector for said microcontroller (1301);
   a multi-conductor, jacketed cable; and,
   connecting elements for said gas sensor hub terminal strip.

5. A gas senor as claimed in claim 1, further comprising:

   a snap action switch (618);
   said snap action switch (618) includes an actuator;
   said actuator of said snap action switch (618) engages said lever (601) when said gas within said reservoir is at specified pressure.

6. A gas sensor as claimed in claim 1, wherein said microcontroller (1301) outputs a control signal when said gas within said reservoir is at a specified pressure.

7. A gas sensor as claimed in claim 5, wherein said snap action switch (618) includes contacts and said actuator alternately makes or breaks said contacts, and, said microcontroller (1301) monitors said contacts of said snap action switch (618) to determine whether contacts of said actuator are closed (made) or open (broken).

8. A process for operating a gas sensor, comprising the steps of:

   measuring the temperature of a gas and a bimetallic element (708) with a temperature sensor (1308);
   biasing a pivotable lever (601) with respect to a base plate (602);
   flexibly interconnecting said pivotable lever (601) to said fixed base plate (602) using a bimetallic element (708), said bimetallic element (708) exerting a variable bias force upon said lever (601) as a function of temperature;
   communicating gas between a gas reservoir and bellows (1003), said bellows (1003) includes a bellows lever coupling (1002), and said bellows lever coupling (1002) includes a pivotable portion;
   pivoting said pivotable lever (601) about said pivotable portion of said bellows lever coupling (1002) of said bellows (1003);
   urging said bellows (1003) and said pivotable portion of said bellows lever coupling (1002) in response to gas pressure in a direction toward or away from said base plate (602);
   **characterized in that** the process further comprises the steps of measuring, using an electronic distance sensor (1310), displacement of said pivotable lever (601) with respect to said base plate (602) as a function of gas pressure within said bellows (1003) and as a function of temperature of said bimetallic element (708);
   outputting a signal representative of said displacement of said pivotable lever (601) with respect to said base plate (602) as a function of gas pressure within said bellows (1003) and as a function of temperature of said bimetallic element (708) to a microcontroller (1301);

outputting a signal representative of said temperature of said gas and said bimetallic element (708) to said electronic microcontroller (1301);

determining, using said microcontroller (1301), a temperature compensated pressure of said gas within said gas reservoir; and,

determining, using said microcontroller (1301), gas density within said gas reservoir.

9. A process for operating a gas sensor as claimed in claim 8 wherein said electronic distance sensor (1310) is a Hall Effect sensor (609).

10. A process for operating a gas sensor as claimed in claim 8 wherein said electronic distance sensor (1310) is a reflective object sensor.

11. A process for operating a gas sensor as claimed in claim 8 wherein said temperature sensor (1308) is a thermistor.

12. A process for operating a gas sensor as claimed in claim 8, wherein said step of measuring displacement of said pivotable lever (601) with respect to said base plate (602) as a function of gas pressure within said bellows (1003) and as a function of temperature of said bimetallic element (708) is performed using a plurality of electronic distance sensors (1310).

**Patentansprüche**

1. Gassensorvorrichtung, umfassend:

einen Flansch (604);
einen Balg (1003);
wobei der Balg (1003) durch den Flansch (604) getragen wird;
eine Anschlussöffnung (1101), wobei über die Anschlussöffnung (1101) die Gasleitung zwischen einem Gasspeicher und dem Balg (1003) erfolgt, wodurch der Balg (1003) in eine Expansionsrichtung gedrückt wird;
eine Grundplatte (602), wobei die Grundplatte (602) durch den Flansch (604) getragen wird;
eine Balgkupplung (1002), wobei die Balgkupplung (1002) einen Schwenkabschnitt beinhaltet;
einen beweglichen Hebel (601);
wobei der Balg (1003) zwischen dem Flansch (604) und der Balgkupplung (1002) angeordnet ist;
die Balgkupplung (1002) zwischen dem Balg (1003) und dem Hebel (601) angeordnet ist,
wobei der Schwenkabschnitt der Balgkupplung (1002) in den beweglichen Hebel (601) eingreift und den Hebel (601) in Abhängigkeit von der Temperatur und dem Druck des Gases verschiebt;
einen einstellbaren Vorspannmechanismus, wobei der Vorspannmechanismus in den Hebel (601) eingreift;
ein bimetallisches Element (708), wobei das bimetallische Element (708) an dem Hebel (601) und an der Grundplatte (602) befestigt ist;
einen elektronischen Abstandssensor (1310), wobei der elektronische Abstandssensor (1310) ein erstes Element aufweist, das an dem Hebel (601) befestigt und mit diesem beweglich ist,
und der Sensor ein zweites Element aufweist, das an der Grundplatte (602) befestigt ist;
**dadurch gekennzeichnet, dass** die Gassensorvorrichtung des Weiteren folgendes umfasst:

einen elektronischen Mikrocontroller (1301);
wobei das zweite Element des elektronischen Abstandssensors (1310) den Abstand zwischen dem ersten Element des elektronischen Abstandssensors (1310) und dem zweiten Element des elektronischen Abstandssensors (1310) erfasst, wobei der elektronische Abstandssensor (1310) ein Signal, das den Abstand zwischen dem ersten und dem zweiten Element darstellt, an den Mikrocontroller (1301) ausgibt;
einen Temperatursensor (1308), wobei der Temperatursensor (1308) ein Signal, das die Temperatur des bimetallischen Elements (708) und des Gases darstellt, an den elektronischen Mikrocontroller (1301) ausgibt;
wobei der Mikrocontroller (1301) einen temperaturkompensierten Druck des Gases in dem Gasspeicher bestimmt; und
der Mikrocontroller (1301) die Gasdichte innerhalb des Gasspeichers bestimmt.

**2.** Vorrichtung nach Anspruch 1, bei der der elektronische Abstandssensor (1310) ein Hall-Sensor (609) ist, und bei der das erste Element des elektronischen Sensors (609) ein Magnet ist und das zweite Element des elektronischen Abstandssensors (1310) die Spannung aufgrund des Vorhandenseins und der Stärke des Magnetfeldes des Magneten misst.

**3.** Vorrichtung nach Anspruch 1, bei der der elektronische Abstandssensor (1310) ein reflektierender Objektsensor ist, und
bei der das erste Element des elektronischen Sensors eine reflektierende Oberfläche ist und das zweite Element des elektronischen Abstandssensors (1310) ein Phototransistor in Kombination mit einem LED-Emitter ist, und der Phototransistor den Abstand zwischen dem ersten und zweiten Element misst.

**4.** Gassensorvorrichtung nach Anspruch 1, des Weiteren umfassend:
Ein Gassensor-Hubmodul, wobei das Gassensor-Hubmodul folgendes beinhaltet:

ein Gehäuse mit Befestigungsflanschen und -löchern;
eine Klemmleiste zum Anschließen des Mikrocontrollers (1301);
eine Klemmleiste zum Anschließen von elektrischer Energie;
einen Schnittstellenport;
eine Verbindungskabelanordnung, die folgendes umfasst;
einen Verbinder für den Mikrocontroller (1301);
ein mehradriges, ummanteltes Kabel; und
Verbindungselemente für die Gassensor-Hub-Klemmleiste.

**5.** Gassensor nach Anspruch 1, des Weiteren umfassend:

einen Schnappschalter (618);
wobei der Schnappschalter (618) ein Stellglied beinhaltet;
wobei das Stellglied des Schnappschalters (618) in den Hebel (601) eingreift, wenn das Gas in dem Speicher unter einem bestimmten Druck steht.

**6.** Gassensor nach Anspruch 1, bei dem der Mikrocontroller (1301) ein Steuersignal ausgibt, wenn das Gas in dem Speicher unter einem bestimmten Druck steht.

**7.** Gassensor nach Anspruch 5, bei dem der Schnappschalter (618) Kontakte aufweist und das Stellglied die Kontakte abwechselnd herstellt oder unterbricht, und der Mikrocontroller (1301) die Kontakte des Schnappschalters (618) überwacht, um zu bestimmen, ob die Kontakte des Stellglieds geschlossen (hergestellt) oder geöffnet (unterbrochen) sind.

**8.** Verfahren zum Betreiben eines Gassensors, folgende Schritte umfassend:

Messen der Temperatur eines Gases und eines bimetallischen Elements (708) unter Verwendung eines Temperatursensors (1308);
Vorspannen eines schwenkbaren Hebels (601) in Bezug auf eine Grundplatte (602);
flexibles Verbinden des schwenkbaren Hebels (601) mit der festen Grundplatte (602) unter Verwendung eines bimetallischen Elements (708), wobei das bimetallische Element (708) eine variable Vorspannkraft auf den Hebel (601) in Abhängigkeit von der Temperatur ausübt;
Leiten von Gas zwischen einem Gasspeicher und einem Balg (1003), wobei der Balg (1003) eine Balghebelkupplung (1002) beinhaltet und die Balghebelkupplung (1002) einen schwenkbaren Abschnitt beinhaltet:

Schwenken des schwenkbaren Hebels (601) um den schwenkbaren Abschnitt der Balghebelkupplung (1002) des Balges (1003) herum;
Drücken des Balgs (1003) und des schwenkbaren Abschnitts der Balghebelkupplung (1002) als Reaktion auf den Gasdruck in eine Richtung zur Grundplatte (602) hin oder von dieser weg;
**dadurch gekennzeichnet, dass** das Verfahren weiterhin die folgenden Schritte umfasst:

Messen, unter Verwendung eines elektronischen Abstandssensors (1310), der Verschiebung des schwenkbaren Hebels (601) in Bezug auf die Grundplatte (602) in Abhängigkeit von dem Gasdruck innerhalb des Balges (1003) sowie in Abhängigkeit von der Temperatur des bimetallischen Elements (708);
Ausgeben eines Signals, das die Verschiebung des schwenkbaren Hebels (601) in Bezug auf die Grundplatte (602) in Abhängigkeit von dem Gasdruck in dem Balg (1003) sowie in Abhängigkeit von der Temperatur des bimetallischen Elements (708) darstellt, an einen Mikrocontroller (1301);
Ausgeben eines Signals, das die Temperatur des Gases und des bimetallischen Elements (708) darstellt, an den elektronischen Mikrocontroller (1301);
Bestimmen eines temperaturkompensierten Drucks des Gases in dem Gasspeicher unter Verwendung des Mikrocontrollers (1301); und
Bestimmen der Gasdichte in dem Gasspeicher unter Verwendung des Mikrocontrollers (1301).

9. Verfahren zum Betreiben eines Gassensors nach Anspruch 8, bei dem der elektronische Abstandssensor (1310) ein Hall-Sensor (609) ist.

10. Verfahren zum Betreiben eines Gassensors nach Anspruch 8, bei dem der elektronische Abstandssensor (1310) ein reflektierender Objektsensor ist.

11. Verfahren zum Betreiben eines Gassensors nach Anspruch 8, bei dem der Temperatursensor (1308) ein Thermistor ist.

12. Verfahren zum Betreiben eines Gassensors nach Anspruch 8, bei dem der Schritt des Messens der Verschiebung des schwenkbaren Hebels (601) in Bezug auf die Grundplatte (602) in Abhängigkeit von dem Gasdruck in dem Balg (1003) sowie in Abhängigkeit von der Temperatur des bimetallischen Elements (708) unter Verwendung einer Vielzahl von elektronischen Abstandssensoren (1310) durchgeführt wird.

## Revendications

1. Appareil capteur de gaz comprenant :

une bride (604) ;
un soufflet (1003) ;
ledit soufflet (1003) étant supporté par ladite bride (604) ;
un orifice (1101), ledit orifice (1101) permettant une communication gazeuse entre un réservoir de gaz et ledit soufflet (1003) en sollicitant ledit soufflet (1003) dans une direction de dilatation ;
une plaque de base (602), ladite plaque de base (602) étant supportée par ladite bride (604) ;
un raccord de soufflet (1002), ledit raccord de soufflet (1002) comporte une partie pivot ;
un levier mobile (601) ;
ledit soufflet (1003) se situant entre ladite bride (604) et ledit raccord de soufflet (1002) ;
ledit raccord de soufflet (1002) se situant entre ledit soufflet (1003) et ledit levier (601), ladite partie pivot dudit raccord de soufflet (1002) coopérant avec ledit levier mobile (601) en déplaçant ledit levier (601) en réponse à la température et à la pression dudit gaz ;
un mécanisme de sollicitation réglable, ledit mécanisme de sollicitation coopérant avec ledit levier (601) ;
un élément bimétallique (708), ledit élément bimétallique (708) étant fixé audit levier (601) et à ladite plaque de base (602) ;
un capteur électronique de distance (1310), ledit capteur électronique de distance (1310) comporte un premier élément fixé audit levier (601) et pouvant se déplacer avec celui-ci, et ledit capteur comporte un second élément fixé à ladite plaque de base (602) ;
**caractérisé en ce que** l'appareil capteur de gaz comprend en outre :

un microcontrôleur électronique (1301) ;
ledit second élément dudit capteur électronique de distance (1310) détectant ladite distance entre ledit premier élément dudit capteur électronique de distance (1310) et ledit second élément dudit capteur électronique de distance (1310), ledit capteur électronique de distance (1310) délivrant en sortie un signal représentant ladite distance entre lesdits premier et second éléments audit microcontrôleur (1301) ;
un capteur de température (1308), ledit capteur de température (1308) délivrant en sortie un signal représentant ladite température dudit élément bimétallique (708) et dudit gaz audit microcontrôleur électronique (1301) ;
ledit microcontrôleur (1301) déterminant une pression compensée en température dudit gaz à l'intérieur dudit réservoir de gaz; et

ledit microcontrôleur (1301) déterminant la densité de gaz à l'intérieur dudit réservoir de gaz.

2. Appareil tel que revendiqué dans la revendication 1, dans lequel ledit capteur électronique de distance (1310) est un capteur à effet Hall (609), et dans lequel :

ledit premier élément dudit capteur électronique (609) est un aimant et ledit second élément dudit capteur électronique de distance (1310) mesure la tension due à la présence et à l'intensité du champ magnétique de l'aimant.

3. Appareil tel que revendiqué dans la revendication 1, dans lequel ledit capteur électronique de distance (1310) est un capteur d'objet réfléchissant, et

dans lequel ledit premier élément dudit capteur électronique est une surface réfléchissante et ledit second élément dudit capteur électronique de distance (1310) est un phototransistor en combinaison avec un émetteur à DEL, et ledit phototransistor mesure la distance entre les premier et second éléments.

4. Appareil capteur de gaz tel que revendiqué dans la revendication 1, comprenant en outre :

un module concentrateur de capteurs de gaz, ledit module concentrateur de capteurs de gaz comporte :

une enceinte dotée de brides de montage et de trous ;
un bornier d'interface dudit microcontrôleur (1301) ;
un bornier d'interface d'alimentation électrique ;
un accès d'interface ;
un ensemble câble d'interconnexion comprenant :

un connecteur destiné audit microcontrôleur (1301) ;
un câble multiconducteur enveloppé ; et
des éléments de connexion pour ledit bornier de concentrateur de capteurs de gaz.

5. Capteur de gaz tel que revendiqué dans la revendication 1, comprenant en outre :

un interrupteur à enclenchement (618) ;
ledit interrupteur à enclenchement (618) comporte un actionneur ;
ledit actionneur dudit interrupteur à enclenchement (618) coopère avec ledit levier (601) lorsque ledit gaz à l'intérieur dudit réservoir est à une pression spécifiée.

6. Capteur de gaz tel que revendiqué dans la revendication 1, dans lequel ledit microcontrôleur (1301) délivre en sortie un signal de commande lorsque ledit gaz à l'intérieur dudit réservoir est à une pression spécifiée.

7. Capteur de gaz tel que revendiqué dans la revendication 5, dans lequel ledit interrupteur à enclenchement (618) comporte des contacts et ledit actionneur établit ou coupe alternativement lesdits contacts, et ledit microcontrôleur (1301) surveille lesdits contacts dudit interrupteur à enclenchement (618) pour déterminer si des contacts dudit actionneur sont fermés (établis) ou ouverts (coupés).

8. Procédé d'utilisation d'un capteur de gaz, comprenant les étapes consistant à :

mesurer la température d'un gaz et d'un élément bimétallique (708) avec un capteur de température (1308) ;
solliciter un levier pivotant (601) par rapport à une plaque de base (602) ;
relier de manière flexible ledit levier pivotant (601) à ladite plaque de base fixe (602) à l'aide d'un élément bimétallique (708), ledit élément bimétallique (708) exerçant une force de sollicitation variable sur ledit levier (601) en fonction d'une température ;
établir une communication gazeuse entre un réservoir de gaz et un soufflet (1003), ledit soufflet (1003) comporte un raccord de levier de soufflet (1002), et ledit raccord de levier de soufflet (1002) comporte une partie pivotante ;
faire pivoter ledit levier pivotant (601) autour de ladite partie pivotante dudit raccord de levier de soufflet (1002) dudit soufflet (1003) ;
solliciter ledit soufflet (1003) et ladite partie pivotante dudit raccord de levier de soufflet (1002) en réponse à une pression de gaz en direction ou en éloignement de ladite plaque de base (602) ;
**caractérisé en ce que** le procédé comprend en outre les étapes consistant à :

mesurer, à l'aide d'un capteur électronique de distance (1310), le déplacement dudit levier pivotant (601) par rapport à ladite plaque de base (602) en fonction de la pression de gaz à l'intérieur dudit soufflet (1003) et en fonction de la température dudit élément bimétallique (708) ;

délivrer en sortie un signal représentant ledit déplacement dudit levier pivotant (601) par rapport à ladite plaque de base (602) en fonction de la pression de gaz à l'intérieur dudit soufflet (1003) et en fonction de la température dudit élément bimétallique (708), à un microcontrôleur (1301) ;

délivrer en sortie un signal représentant ladite température dudit gaz et dudit élément bimétallique (708), audit microcontrôleur électronique (1301) ;

déterminer, à l'aide dudit microcontrôleur (1301), une pression compensée en température dudit gaz à l'intérieur dudit réservoir de gaz; et

déterminer, à l'aide dudit microcontrôleur (1301), la densité de gaz à l'intérieur dudit réservoir de gaz.

9. Procédé d'utilisation d'un capteur de gaz, tel que revendiqué dans la revendication 8, dans lequel ledit capteur électronique de distance (1310) est un capteur à effet Hall (609).

10. Procédé d'utilisation d'un capteur de gaz, tel que revendiqué dans la revendication 8, dans lequel ledit capteur électronique de distance (1310) est un capteur d'objet réfléchissant.

11. Procédé d'utilisation d'un capteur de gaz, tel que revendiqué dans la revendication 8, dans lequel ledit capteur de température (1308) est une thermistance.

12. Procédé d'utilisation d'un capteur de gaz, tel que revendiqué dans la revendication 8, dans lequel ladite étape consistant à mesurer le déplacement dudit levier pivotant (601) par rapport à ladite plaque de base (602) en fonction de la pression de gaz à l'intérieur dudit soufflet (1003) et en fonction de la température dudit élément bimétallique (708) est exécutée à l'aide d'une pluralité de capteurs électroniques de distance (1310).

FIG. 1

FIG. 2

300

306
304
305
302
301
303
204
205

FIG. 3

FIG. 4

500

509    507    506    504    505
508         507
507         507A    507B    105    105A    501    503    502

FIG. 5

FIG. 6

FIG. 6A

FIG. 6B

EP 2 880 413 B1

FIG. 7

29

800

610

609 610A        610B

507B                      507D

509                              618AA

                                 618A

618D

618C                              618B

617D                              617B

505

105

501

503        502

FIG. 8

800A

609
610
618AA
618A
105
105A

507A
507C
507B
507D
617C
617D
617A
617B
502
503
501

FIG. 8A

FIG. 9

FIG. 10

FIG. 10A

FIG. 10B

1100

501

1100A                1100A

619

**FIG. 11**

1100A

606

608

501

1103

602

1102

601

1104

1002

603

1003

604

1101

**FIG. 11A**

1200

# FIG. 12

1200A

# FIG. 12A

1308A — TEMP PROBE 1

1308B — TEMP PROBE 2

1308C — TEMP PROBE 3

1308D — TEMP PROBE 4

1310 — HI-RES TRANSDUCER OPTION X

1309 — DISPLACEMENT INTERFACE

1307 — TEMPERATURE INTERFACE

1306 — SAFETY LIMITS

1300

BATTERY — 1311

MCU — 1301

ASYNC — 1302

ADC12 — 1303

DAC12 — 1304

DIGITAL — 1305

TEST CONTROLLER — 1312

## FIG. 13

1400

1401 — RAW CONVERSIONS

1406 — SIGNAL PROCESSING PARAMETERS

1407 — PRESSURE READINGS

1402 — SNR ENHANCEMENT

1403 — DISPLACEMENT TO PRESSURE LINEARIZATION

1404 — PRESSURE CALIBRATION

1405 — FILTER

## FIG. 14

FIG. 15

FIG. 16

FIG. 17

FIG. 18

FIG.19

2000

FIG. 20

2100

FIG. 21

2200

1908    1909    1910

FIG. 22

2301    2300

2303    2304

2302

2301

FIG. 23

2400

2401

## 2TC Smart Switch Browser

2402
2403
2407
2404
2405
2406
2408

2409

Switch 1

2417

2TC Smart Switch Report

| Power | Temperature (C) | Gauge Pressure (psig) | Gas Mass (kg) | Alarm State |
|---|---|---|---|---|
| | 20.9 | 74.3 | 35.9 | Fill |

Export Trend Data (Points accumulated: 52497) Clear Trend Data

2410
2413
2411
2414
2415
2412
2416

## FIG. 24

2500

2501

Application Configuration

| SF6 Ref Temp (C) | Operate (psig) | Alarm (psig) | Lockout (psig) | Overpressure Relief (psig) | Breaker Nom V (kV) | Breaker Nom Inter I (kA) |
|---|---|---|---|---|---|---|
| 20 | 78 | 68 | 64 | 82.5 | 230 | 40 |
| | 36.3 kg | 33.9 kg | 31.3 kg | 39.3 kg | | 80 km |

2502
2503
2504
2505
2506
2507
2508

| Atmosphere (psi) | | | | Tank Volume (m^3) | Operate Gas Mass |
|---|---|---|---|---|---|
| 14.7 | | | | 0.973 | 36.3 kg |

2509
2510
2511

## FIG. 25

2600

2601 2602 2603 2604 2605

| Time | Temp (C) | Pressure (psig) | SF6 (kg) | Alarm State |
|---|---|---|---|---|
| 7/1/12 20:23 | 34.65 | 85.66 | 37.09 | OPERATE |
| 7/1/12 22:47 | 35.92 | 86.05 | 37.08 | OPERATE |
| 7/2/12 01:11 | 37.77 | 86.62 | 37.07 | OPERATE |
| 7/2/12 03:35 | 38.59 | 86.86 | 37.06 | OPERATE |
| 7/2/12 05:59 | 37.65 | 86.53 | 37.05 | OPERATE |
| 7/2/12 08:23 | 40.62 | 87.47 | 37.04 | OPERATE |
| 7/2/12 10:47 | 35.51 | 85.78 | 37.03 | OPERATE |
| 7/2/12 13:11 | 35.03 | 85.59 | 37.02 | OPERATE |
| 7/2/12 15:35 | 36.50 | 86.04 | 37.01 | OPERATE |
| 7/2/12 17:59 | 35.19 | 85.59 | 37.00 | OPERATE |
| 7/2/12 20:23 | 40.55 | 87.31 | 36.99 | OPERATE |
| 7/2/12 22:47 | 34.33 | 85.26 | 36.98 | OPERATE |

FIG. 26

FIG. 27

| Pin # | Color |
|---|---|
| 1 | Black |
| 2 | White |
| 3 | Blue |
| 4 | Red |
| 5 | Orange |
| 6 | Yellow |
| 7 | Violet |
| 8 | Brown |
| 9 | Green |
| 10 | White/Black |
| 11 | White/Gray |
| 12 | White/Blue |
| 13 | White/Red |
| 14 | White/Orange |
| 15 | White/Yellow |
| 16 | While/Violet |

FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3749865 A

- US 4364271 A

**Non-patent literature cited in the description**

- **J. BLACKMAN ; M. AVERYT ; Z. TAYLOR.** SF6 Leak Rates from High Voltage Circuit Breakers - U.S. EPA Investigates Potential Greenhouse Gas Emissions Source. *International Conference on SF6 and the Environment: Electric Power Systems - Partnership Update,* 28 November 2006, http://www.epa.gov/electricpower-sf6/documents/leak rates_circuitbreakers .pdf